# EUROPEAN PATENT SPECIFICATION

(11) **EP 4 241 641 B1**
(45) Date of publication and mention of the grant of the patent: **24.09.2025**
(21) Application number: 21888895.6
(22) Date of filing: 16.08.2021
(51) Int. Cl.: G05D 1/229, A47L 11/40, A47L 9/28, G05D 1/242, G05D 1/246, G05D 109/10, G05D 105/10, G05D 111/10

(54) **METHOD FOR RECORDING A TAUGHT TRAVEL OF AN AUTONOMOUS TRAVELING BODY, ASSOCIATED AUTONOMOUS TRAVELING BODY AND RECORDING MEDIUM**
VERFAHREN ZUR REISELEHRAUFZEICHNUNG FÜR AUTONOMEN FAHRKÖRPER, AUTONOMER FAHRKÖRPER UND AUFZEICHNUNGSMEDIUM DAZU
PROCÉDÉ D'ENREGISTREMENT D'UN DÉPLACEMENT APPRIS POUR UN VÉHICLE MOBILE AUTONOME, VÉHICLE MOBILE AUTONOME ET SUPPORT D'ENREGISTREMENT ASSOCIÉ

(30) Priority: 04.11.2020 JP 2020184359
(43) Date of publication of application: 13.09.2023
(73) Proprietor: Murata Machinery, Ltd., Kyoto-shi, Kyoto 601-8326 (JP)
(72) Inventor: SAKAI, Tsukasa, Kyoto 612-8686 (JP)
(74) Representative: Stöckeler, Ferdinand
(86) International application number: PCT/JP2021/029857
(87) International publication number: WO 2022/097342

(56) References cited:
- EP-A1- 3 508 104
- JP-A- 2018 112 917
- JP-A- H08 326 025
- JP-A- H08 326 025
- US-A1- 2007 198 159
- US-A1- 2015 271 991

## Description

### TECHNICAL FIELD

The present invention relates to a travel teaching recording method for an autonomous traveling body, the autonomous traveling body that performs the travel teaching recording method, and a recording medium that stores a program that causes a computer to execute the travel teaching recording method.

### BACKGROUND ART

Conventionally, there is known an autonomous traveling body that autonomously travels according to path planning from a travel start position to a travel end position. As an example, an autonomous travel type floor cleaning machine reproduces a travel path and cleaning conditions taught by an operator's operation, so as to autonomously travel the taught travel path while reproducing cleaning according to the taught cleaning conditions.

In a teaching travel, an operator operates the autonomous traveling body to travel along a travel path while teaching information such as position, speed, and the like to the autonomous traveling body. There are two types of autonomous reproduction travels. One is a copy travel in which the travel path taught by the operator in advance is autonomously traveled as it is. The other is filling travel in which a control unit determines an autonomous travel path within an outer periphery taught by direct teaching by the operator in advance, and the autonomous travel path is autonomously traveled.

In the teaching travel, the operator continuously operates a moving body without stopping the teaching operation. An autonomous lawn mower robot described in JP 6679506 B1 has a function to stop recording data when an unintentional action occurs during the teaching travel, as described in claim 14 and paragraph 0005.

US 2007 / 198 159 A1 discloses a robotic vehicle controller, which allows a robot to slow down in speed, if an object is close. JP H08 326 025 A discloses a cleaning robot, wherein an operator may select a travel speed.

### SUMMARY OF INVENTION

### TECHNICAL PROBLEM

If there is an obstacle on a route during the teaching travel, the operator stops operation of the autonomous moving body and removes the obstacle from the route. In this case, although the travel of the autonomous moving body is stopped, the teaching continues. As a result, in the copy travel for example, unnecessary wait time (i.e. time for removing the obstacle in this case) is reproduced, resulting in deterioration of work efficiency. Otherwise, the teaching travel needs to be performed again.

Conventionally, the operator stops travel of the autonomous moving body, and then presses a record stop button. In this way, in the autonomous reproduction travel, position and speed are continuous before and after the stop. However, if the operator presses the record stop button while the autonomous moving body is traveling, the autonomous moving body continues to travel after the record stop button is pressed. As a result, when joining the record before stopping recording and the record after resuming recording, position and speed become discontinuous in the autonomous reproduction travel.

In a travel teaching recording method for an autonomous traveling body, it is an object of the present invention to enable smooth travel in autonomous reproduction travel, when the autonomous traveling body travels based on the record before stopping recording and the record after resuming recording in teaching travel.

### TECHNICAL SOLUTION

Hereinafter, a plurality of aspects are described as means for solving the problem. These aspects can be arbitrarily combined as necessary.

A travel teaching recording method for an autonomous traveling body according to an aspect of the present invention is used for an autonomous traveling body equipped with a body, a storage unit that stores environment information and body position information when the body performs a teaching travel, and a pause switch configured to stop or resume the teaching travel of the body and a recording of the teaching travel. The travel teaching recording method includes:
detecting whether or not an operator has performed stopping operation of the pause switch;
stopping traveling of the autonomous traveling body and controlling timing to stop recording in the storage unit if the stopping operation of the pause switch is detected;
detecting whether or not the operator has performed resuming operation of the pause switch;
starting traveling of the autonomous traveling body and controlling timing to resume the recording in the storage unit if the resuming operation of the pause switch is detected; and
joining the record before stopping recording and the record after resuming recording so as to store a joined record in the storage unit,
further comprising creating information to join information of a recording stop position and information of a recording resume position.

In this method, when the operator performs the stopping operation of the pause switch in the teaching travel, stopping traveling of the autonomous traveling body and stopping recording in the storage unit are performed. In addition, when the operator performs the resuming operation of the pause switch in the teaching travel, starting of travel of the autonomous traveling body and starting of recording in the storage unit are performed. As for the record, the record before stopping recording and the record after resuming recording are joined. Therefore, in the reproduction travel, the autonomous traveling body can travel using the joined record of the record before stopping recording and the record after stopping recording. In other words, the problem that position and speed of the autonomous moving body become discontinuous in the reproduction travel does not occur.

As a result, in the autonomous reproduction travel, the autonomous traveling body can travel smoothly when traveling based on the record before stopping recording and the record after resuming recording in the teaching travel. Therefore, it is possible to stop the autonomous traveling body during the teaching travel, so as to perform removal of an obstacle on a path or other work. In addition, during the teaching travel, the operator can wait for another person or object to pass, or can leave for checking a route or resting.

The timing to stop recording may be a predetermined time after stopping traveling of the autonomous traveling body. In this method, recording is stopped at a predetermined time after stopping travel, i.e., after travelling speed of the autonomous traveling body becomes substantially zero, and hence, state and operation of the autonomous traveling body after stopping travel, i.e., a situation where the autonomous traveling body stays at the position without doing anything is recorded. Therefore, in the reproduction travel, the autonomous traveling body does not start travelling immediately after sudden stop. In other words, in the reproduction travel, travel and operation of the autonomous traveling body are stable.

The timing to stop recording may be simultaneous with stopping traveling of the autonomous traveling body. In this method, as recording is stopped simultaneously with stopping travel, stop period of the autonomous traveling body in the reproduction travel can be minimized.

This method may further include editing stored information after the operator's stopping operation of the pause switch until stopping recording. In this method, for example, by editing the stored information so as to reduce deceleration after operator's stopping operation of the pause switch until stopping recording, the autonomous traveling body can gently stop in pausing.

Note that in the above editing, it may be possible to edit either or both before and after the period after the stopping operation of the pause switch until stopping recording.

The timing to resume recording may be simultaneous with starting traveling of the autonomous traveling body. In this method, a stop state before starting traveling of the autonomous traveling body is not recorded. Therefore, in the reproduction travel, zero speed place can be reduced.

The timing to resume recording may be a predetermined time after starting traveling of the autonomous traveling body. In this method, in the teaching travel, decelerating operation and accelerating operation of the autonomous traveling body are not recorded, for example. Therefore, in the reproduction travel, the autonomous traveling body does not perform the operations corresponding to acceleration and deceleration in the teaching travel.

As described above, this method further includes creating information to join information of a recording stop position and information of a recording resume position. In this method, information can be edited so that position, speed, and device operation can be smoothly joined between when stopping recording and when resuming recording.

Note that in the above editing, it may be possible to edit either or both before and after the period after the recording stop position until the recording resume position.

The timing to stop recording may be simultaneous with the operator's stopping operation of the pause switch. In this method, in the teaching travel, decelerating operation of the autonomous traveling body is not recorded, for example. Therefore, in the reproduction travel, the autonomous traveling body does not perform the operation corresponding to the decelerating in the teaching travel.

The timing to resume recording may be simultaneous with the operator's resuming operation of the pause switch. In this method, the stop state before starting traveling of the autonomous traveling body is recorded. Therefore, in the reproduction travel, the autonomous traveling body does not start travelling immediately after sudden stop after pause. In other words, the autonomous traveling body securely stops traveling.

A travel teaching recording method for an autonomous traveling body according to another aspect of the present invention is used for an autonomous traveling body equipped with a body, a storage unit that stores environment information and body position information when the body performs a teaching travel, and a record pause switch configured to stop or resume recording of the environment information and the body position information and the record pause switch is enabled only during stop of the body. The travel teaching recording method includes:
detecting whether or not an operator has performed stopping operation of the record pause switch;
controlling timing to stop recording in the storage unit if the stopping operation of the record pause switch is detected;
detecting whether or not the operator has performed resuming operation of the record pause switch;
controlling timing to resume recording in the storage unit if the resuming operation of the record pause switch is detected; and
joining the record before stopping recording and the record after resuming recording so as to store a joined record in the storage unit.

In this method, the record pause switch is disabled during teaching and traveling, and it becomes enabled when the autonomous traveling body stops teaching and traveling. The operator performs the stopping operation of the record pause switch during stop of the autonomous traveling body, and after that performs resuming operation of the record pause switch. When the stopping operation of the record pause switch is performed, recording is promptly stopped. When the resuming operation of the record pause switch is performed, recording is promptly resumed. The record pause switch does not function while the autonomous traveling body is traveling, and the problem that position and speed of the autonomous moving body become discontinuous in the reproduction travel does not occur.

An autonomous traveling body according to still another aspect of the present invention includes a body, a storage unit that stores environment information and body position information when the body performs a teaching travel, a pause switch configured to stop and resume the teaching travel of the body and to record the teaching travel, and a processor. The processor performs:
detecting whether or not an operator has performed stopping operation of the pause switch;
stopping traveling of the autonomous traveling body and controlling timing to stop recording in the storage unit if the stopping operation of the pause switch is detected;
detecting whether or not the operator has performed resuming operation of the pause switch;
starting traveling of the autonomous traveling body and controlling timing to start the recording in the storage unit if the resuming operation of the pause switch is detected; and
joining the record before stopping recording and the record after resuming recording so as to store a joined record in the storage unit,
further comprising creating information to join information of a recording stop position and information of a recording resume position.

A recording medium according to still another aspect of the present invention stores a program that causes a computer to perform a travel teaching recording method for an autonomous traveling body, including a body, a storage unit that stores environment information and body position information when the body performs a teaching travel, and a pause switch configured to stop and resume the teaching travel of the body and to record the teaching travel. The program causes the computer to perform:
detecting whether or not an operator has performed stopping operation of the pause switch;
stopping traveling of the autonomous traveling body and controlling timing to stop recording in the storage unit if the stopping operation of the pause switch is detected;
detecting whether or not the operator has performed resuming operation of the pause switch;
starting traveling of the autonomous traveling body and controlling timing to start the recording in the storage unit if the resuming operation of the pause switch is detected; and
joining the record before stopping recording and the record after resuming recording so as to store a joined record in the storage unit,
further comprising creating information to join information of a recording stop position and information of a recording resume position.

### ADVANTAGEOUS EFFECTS

**In** the travel teaching recording method for an autonomous traveling body according to the present invention, the autonomous traveling body can smoothly travel in the reproduction travel when it travels based on record before stopping recording and record after resuming recording in teaching travel.

### BRIEF DESCRIPTION OF DRAWINGS

Fig. 1 is a diagram illustrating an overall structure of an example of a cleaning machine.
Fig. 2 is a diagram illustrating an example of a structure of a travel path teaching unit.
Fig. 3 is a diagram illustrating a structure of a setting unit.
Fig. 4 is a diagram illustrating an overall structure of a control unit.
Fig. 5 is a diagram illustrating a detailed structure of a cleaning control unit.
Fig. 6 is a diagram illustrating a detailed structure of a travel control unit.
Fig. 7 is a diagram illustrating a detailed structure of a general control unit.
Fig. 8 is a flowchart illustrating a basic operation of the cleaning machine.
Fig. 9 is a flowchart illustrating an operation in a manual operation teaching mode.
Fig. 10 is a flowchart illustrating an operation of the cleaning machine when executing an autonomous cleaning mode.
Fig. 11 is a flowchart illustrating a travel teaching recording control operation according to first to fourth embodiments.
Fig. 12 is a graph illustrating the relationship between time and speed in teaching travel according to the first embodiment.
Fig. 13 is a graph illustrating the relationship between time and speed in reproduction travel according to the first embodiment.
Fig. 14 is a graph illustrating the relationship between time and speed in teaching travel according to the second embodiment.
Fig. 15 is a graph illustrating the relationship between time and speed in reproduction travel according to the second embodiment.
Fig. 16 is a graph illustrating the relationship between time and speed in teaching travel according to the third embodiment.
Fig. 17 is a graph illustrating the relationship between time and speed in reproduction travel according to the third embodiment.
Fig. 18 is a graph illustrating the relationship between time and speed in teaching travel according to the fourth embodiment.
Fig. 19 is a graph illustrating the relationship between time and speed in reproduction travel according to the fourth embodiment.
Fig. 20 is a diagram illustrating an overall structure of the control unit according to a fifth embodiment.
Fig. 21 is a flowchart illustrating the travel teaching recording control operation according to the fifth embodiment.
Fig. 22 is a graph illustrating the relationship between time and speed in teaching travel according to the fifth embodiment.
Fig. 23 is a graph illustrating the relationship between time and speed in reproduction travel according to the fifth embodiment.

### DESCRIPTION OF EMBODIMENTS

### 1. First Embodiment

### (1) Overall Structure of Autonomous Travel Type Floor Cleaning Machine

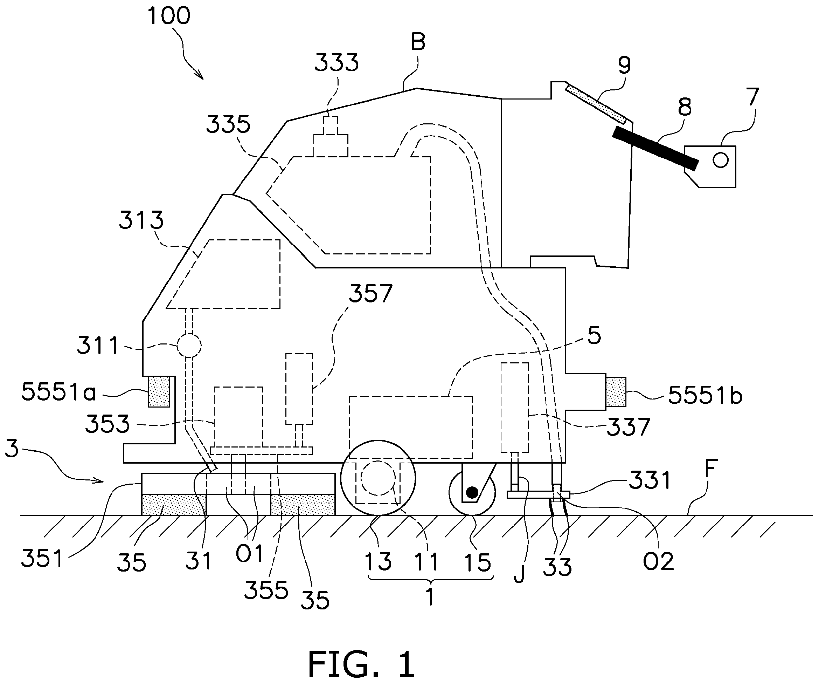

With reference to Fig. 1, there is described an overall structure of an autonomous travel type cleaning machine 100 (hereinafter referred to as a "cleaning machine 100", an example of an autonomous traveling body) according to a first embodiment. Fig. 1 is a diagram illustrating an overall structure of an example of the cleaning machine. The cleaning machine 100 is a cleaning machine that autonomously reproduces set cleaning conditions and travel path.

The cleaning machine 100 includes a travel unit 1. The travel unit 1 is a device that causes the cleaning machine 100 to travel. The travel unit 1 has a main body B that is a main body of the cleaning machine 100. The travel unit 1 includes a travel motor 11 and a main wheel 13 connected to an output rotation shaft of the travel motor 11 so as to rotate along with rotation of the travel motor 11, which are disposed on each of the left and right ends of a bottom part of the main body B.

The cleaning machine 100 includes a cleaning unit 3. The cleaning unit 3 is a device provided to the bottom part of the main body B, so as to clean a floor surface F according to designated cleaning conditions. The cleaning unit 3 includes a cleaning liquid discharge port 31, a squeegee 33, and a cleaning member 35.

The cleaning liquid discharge port 31 is a hollow member having one end that discharges cleaning liquid, for example. For instance, the one end of the hollow member constituting the cleaning liquid discharge port 31 is disposed at a position corresponding to a cavity O1 formed in a fixing member 351 that fixes the cleaning member 35. On the other hand, the other end of the member is connected to an outlet side of a cleaning liquid supply pump 311 that supplies the cleaning liquid.

An inlet side of the cleaning liquid supply pump 311 is mounted inside the main body B, and is connected to an outlet of a cleaning liquid supply tank 313 that stores the cleaning liquid. With this structure, the cleaning liquid stored in the cleaning liquid supply tank 313 is adjusted in its supply amount by the cleaning liquid supply pump 311 and is supplied to the cleaning liquid discharge port 31. Then, it is discharged from the one end of the cleaning liquid discharge port 31 through the cavity O1 onto the floor surface F. The cleaning liquid can be water, for example.

The squeegee 33 is a member that is fixed to a squeegee fixing member 331 and is disposed on the rear side of the bottom surface of the main body B, so as to collect the cleaning liquid remaining on the floor surface F (the cleaning liquid after being used for cleaning the floor surface F). The squeegee 33 extends a predetermined length in the width direction of the main body B, and moves along with movement of the main body B, so as to form an area defined by the movement locus of the main body B and length of the squeegee 33 in the width direction (the area referred to as a squeegee locus). The squeegee 33 collects the cleaning liquid within the squeegee locus.

As the cleaning machine 100 is equipped with the cleaning unit 3 described above, it can perform the cleaning operation so as to polish the floor surface F with the cleaning member 35 using the cleaning liquid.

The squeegee fixing member 331 is provided with a suction port O2. The suction port O2 is connected to a collecting member 335 (e.g., a container having a cavity) that is sucked by a suction motor 333 to become negative pressure inside. In this way, the suction port O2 generates a suction force P when suction by the suction motor 333 makes the collecting member 335 become negative pressure. As a result, the suction port O2 uses the suction force P to suck the cleaning liquid, dust, and the like collected by the squeegee 33, and can convey them to the collecting member 335. The suction force P generated at the suction port O2 can be adjusted by adjusting output of the suction motor 333, for example.

The squeegee fixing member 331 is connected to a squeegee lift actuator 337 via a joint J and can move up and down with respect to the floor surface F. In this way, the squeegee 33 can be arbitrarily set to contact with or separate from the floor surface F. As a result, the squeegee 33 can suppress the liquid (such as cleaning liquid) and the like on the floor surface F from moving to the rear of the cleaning machine 100.

The cleaning member 35 is a brush for cleaning the floor surface F, which is fixed to the fixing member 351 disposed on the front side of the bottom surface of the main body B. The fixing member 351 is connected to the output rotation shaft of a cleaning member rotating motor 353. Therefore, the cleaning member 35 rotates on the floor surface F with the cleaning liquid by rotation of the cleaning member rotating motor 353, so as to clean the floor surface F.

The cleaning machine 100 includes a control unit 5. The control unit 5 is a computer system including a CPU, a storage device (such as a RAM, a ROM, a hard disk drive, and an SSD), and various interfaces. The control unit 5 performs various controls regarding the cleaning machine 100 (as described later).

The cleaning machine 100 includes a travel path teaching unit 7. The travel path teaching unit 7 is a device that receives operator's operations to move the travel unit 1. The travel path teaching unit 7 is mounted via an attachment member 8 to the upper rear side of the main body B. In this way, the operator can operate the travel unit 1 to move by operating the travel path teaching unit 7 (as described later).

As another embodiment, the travel path teaching unit 7 may not be mounted to the main body B. In this case, the travel path teaching unit 7 is a controller such as a joy stick, for example. In this way, the operator can remote control the cleaning machine 100.

The cleaning machine 100 includes a setting unit 9. The setting unit 9 is a console panel for various settings regarding the cleaning machine 100, and is mounted to the surface of the main body B on the upper rear side. In addition, the setting unit 9 is disposed near the travel path teaching unit 7. In this way, the operator can operate the setting unit 9 while operating the travel path teaching unit 7 so as to control the travel unit 1.

As another embodiment, the travel path teaching unit 7 may not be mounted to the main body B. In this case, the travel path teaching unit 7 is a controller such as a joy stick, for example. In this way, the operator can remote control the cleaning machine 100.

### (2) Structure of Travel Path Teaching Unit

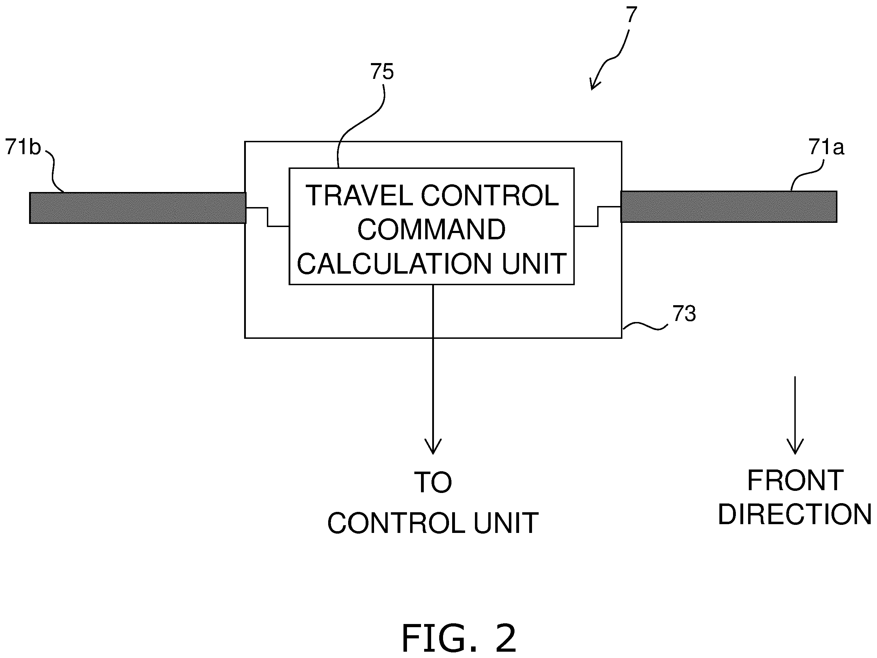

With reference to Fig. 2, an example of a structure of the travel path teaching unit 7 is described. Fig. 2 is a diagram illustrating an example of a structure of the travel path teaching unit. The travel path teaching unit 7 includes handles 71a and 71b. The handles 71a and 71b are respectively mounted to the left and right side surfaces of a package 73. The handles 71a and 71b are used when the operator controls the cleaning machine 100.

For instance, the operator who holds the handles 71a and 71b can apply a force to the cleaning machine 100 either in a pulling direction toward the operator or in a pushing direction, using the handles 71a and 71b. By adjusting forces applied to the handles 71a and 71b, respectively, the operator can adjust the travel direction of the cleaning machine 100. For instance, when a pulling force is applied to the right side handle 71a viewed from the front of cleaning machine 100, the cleaning machine 100 changes its direction to the left.

The handles 71a and 71b are mounted to the package 73 in a rotatable manner. **In** addition, the handles 71a and 71b are connected to the control unit 5 via a travel control command calculation unit 75. The travel control command calculation unit 75 converts rotations of the handles 71a and 71b into electric signals and outputs the signals to the control unit 5. **In** this way, the operator can control the cleaning machine 100 (the travel unit 1) by rotation operations of the handles 71a and 71b.

For instance, by adjusting rotation directions of the handles 71a and 71b, the operator may be able to switch the travel direction of the cleaning machine 100 between forward and backward. **In** addition, by adjusting rotation amounts of the handles 71a and 71b, a travel speed of the cleaning machine 100 may be adjustable. Furthermore, it may be possible to change the travel direction of the cleaning machine 100 by differentiating the rotation amounts between the handle 71a and the handle 71b.

### (3) Structure of Setting Unit

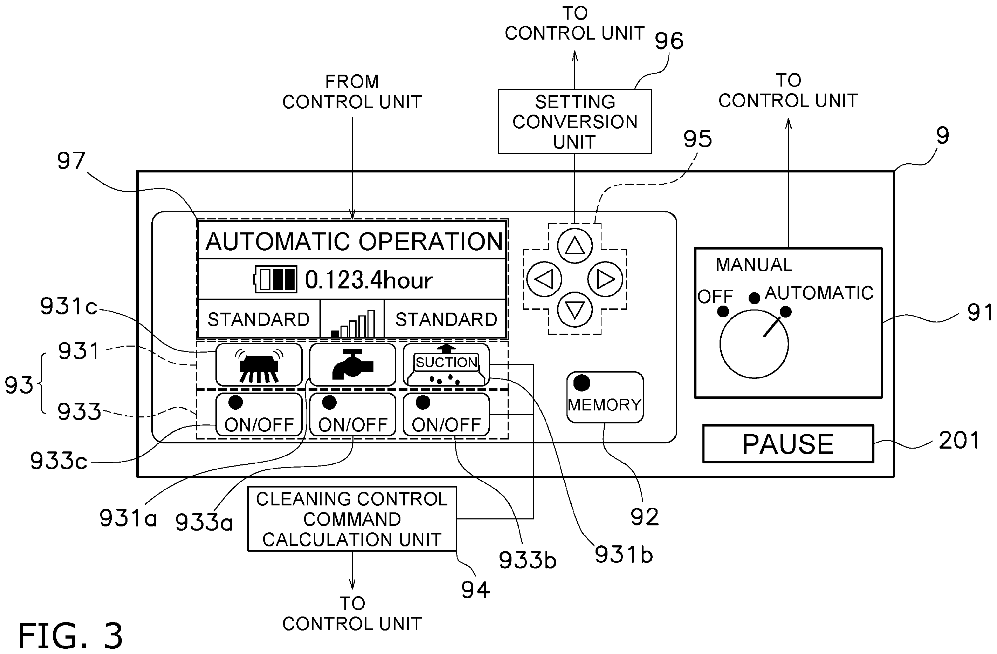

With reference to Fig. 3, a structure of the setting unit 9 is described. Fig. 3 is a diagram illustrating a structure of the setting unit. The setting unit 9 includes a selection unit 91. The selection unit 91 selects an operation mode of the cleaning machine 100, and outputs the selected mode information to the control unit 5. The operation modes of the cleaning machine 100 include an autonomous cleaning mode and a manual operation mode. The autonomous cleaning mode is an operation mode in which the cleaning machine 100 autonomously reproduces travel and operation so as to clean the floor surface F. The manual operation mode is an operation mode in which the cleaning machine 100 can be manually controlled by the operator. The selection unit 91 can be constituted of a selection switch as illustrated in Fig. 3, for example.

The setting unit 9 includes a manual operation memory switch 92. The manual operation memory switch 92 is a switch that starts or stops storing the operator's manual operations of the cleaning machine 100. Specifically, when the manual operation memory switch 92 is pressed after the operation mode is set to the manual operation mode by the selection unit 91, a manual operation teaching mode is started as a sub operation mode of the manual operation mode, in which cleaning conditions and a travel path of the manual operation performed by the operator are taught to the cleaning machine 100. On the other hand, when the manual operation memory switch 92 is switched while executing the manual operation teaching mode, the manual operation teaching mode is stopped.

The manual operation memory switch 92 can be a push button switch as illustrated in Fig. 3, for example. In this case, the manual operation memory switch 92 is switched by pressing the push button switch.

As illustrated in Fig. 3, a cleaning condition teaching unit 93 includes a cleaning condition adjusting section 931. The cleaning condition adjusting section 931 includes a supply amount adjusting section 931a for setting supply amount S of the cleaning liquid discharged from the cleaning liquid discharge port 31 as a teaching cleaning condition. The supply amount adjusting section 931a is constituted of a push button switch, for example, and can set the supply amount S by the number of pressing times of the button.

The cleaning condition adjusting section 931 includes a suction force adjusting section 931b for setting the suction force P at the suction port O2 as a teaching cleaning condition. The suction force adjusting section 931b is a push button switch, for example, and can adjust the suction force P by the number of pressing times of the button. In this way, the suckable range of the cleaning liquid on the floor surface F can be adjusted.

The cleaning condition adjusting section 931 includes a cleaning power adjusting section 931c for setting cleaning power W of the floor surface F by the cleaning member 35 as a teaching cleaning condition. The cleaning power adjusting section 931c is a push button switch, for example, and can adjust the cleaning power W of the floor surface F by the cleaning member 35 by the number of pressing times of the button.

The cleaning condition teaching unit 93 includes an operation selection section 933. The operation selection section 933 includes a supply selection section 933a for commanding supply start or stop of the cleaning liquid from the cleaning liquid discharge port 31. The supply selection section 933a can be a push button switch, for example, and can select supply start or supply stop of the cleaning liquid by pressing the button.

The operation selection section 933 includes a suction selection section 933b for commanding suction start or stop by the suction port O2. The suction selection section 933b is a push button switch, for example, and can select suction start or suction stop by pressing the button.

The operation selection section 933 includes a cleaning selection section 933c for commanding cleaning start or stop of the floor surface F by the cleaning member 35. The cleaning selection section 933c is a push button switch, for example, and can select cleaning start or stop of the floor surface F by pressing the button.

The setting unit 9 is equipped with a pause switch 201 as illustrated in Fig. 3. The pause switch 201 is a switch that stops or resumes (i.e., releasing stop of) teaching travel and recording during the teaching travel based on an operator's operation. If the pause switch 201 is pressed once during traveling, it means that stopping operation (described later) is performed. Further, if it is pressed again, it means that resuming operation (described later) is performed. Note that the pause switch 201 is a push button, but it may be another type of switch.

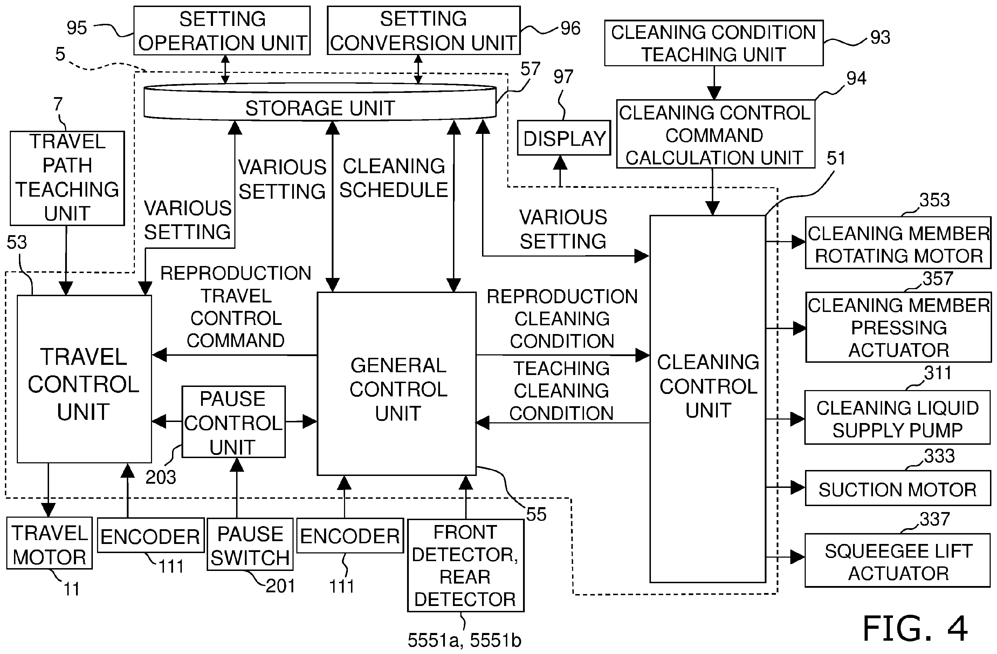

The pause switch 201 is connected to a pause control unit 203 in the control unit 5 as illustrated in Fig. 4. The pause control unit 203 performs various control based on operation of the pause switch 201 (as described later).

The setting unit 9 includes a setting operation unit 95. The setting operation unit 95 is constituted of a push switch or the like, for example, and receives input of various settings regarding to the cleaning machine 100, so as to output the same to the control unit 5 via a setting conversion unit 96.

The setting conversion unit 96 is a signal conversion circuit or a computer system that converts the input received by the setting operation unit 95 into a signal readable by the control unit 5.

The setting unit 9 includes a display 97. The display 97 displays various setting information regarding to the cleaning machine 100, which are currently set. The display 97 is a liquid crystal display, an organic EL display, or the like, for example.

In another embodiment, the display 97 may further display a current operation mode (the autonomous travel mode, the manual operation mode, or the manual operation teaching mode), operating time, or a remaining level of battery for driving the cleaning machine 100.

In still another embodiment, the display 97 may display various setting procedures when performing various settings of the cleaning machine 100 with the setting operation unit 95. In this way, it is possible to provide the operator with information regarding the cleaning machine 100 in a visual manner, so that the operator can operate the setting unit 9 based on the displayed information.

In another embodiment, the display 97 may be equipped with a touch panel. In this case, the selection unit 91, the manual operation memory switch 92, the setting operation unit 95 and/or the pause switch 201, which are described above, may be realized by the touch panel.

The setting unit 9 includes the cleaning condition teaching unit 93. The cleaning condition teaching unit 93 receives input of the cleaning conditions from the operator, and output the same to a cleaning control command calculation unit 94. The cleaning control command calculation unit 94 is a signal conversion circuit or a computer system that converts the cleaning conditions received by the cleaning condition teaching unit 93 into a signal readable by the control unit 5, and outputs the signal to the control unit 5.

### (4) Structure of Control Unit

### (4-1) Overall Structure of Control Unit

With reference to Fig. 4, an overall structure of the control unit 5 is described. Fig. 4 is a diagram illustrating an overall structure of the control unit. The whole or a part of function blocks of the control unit 5 described below may be realized by a program executable by a computer system constituting the control unit 5. In this case, the program may be stored in a memory unit and/or a storage device. The whole or a part of the function blocks of the control unit 5 may be realized by a custom IC such as a system on chip (SoC).

The control unit 5 may be a single computer system or a plurality of computer systems. If the control unit 5 is a plurality of computer systems, functions realized by the function blocks of the control unit 5 can be assigned to the computer systems at an arbitrary ratio for execution, for example.

### (4-2) Structure of Cleaning Control Unit

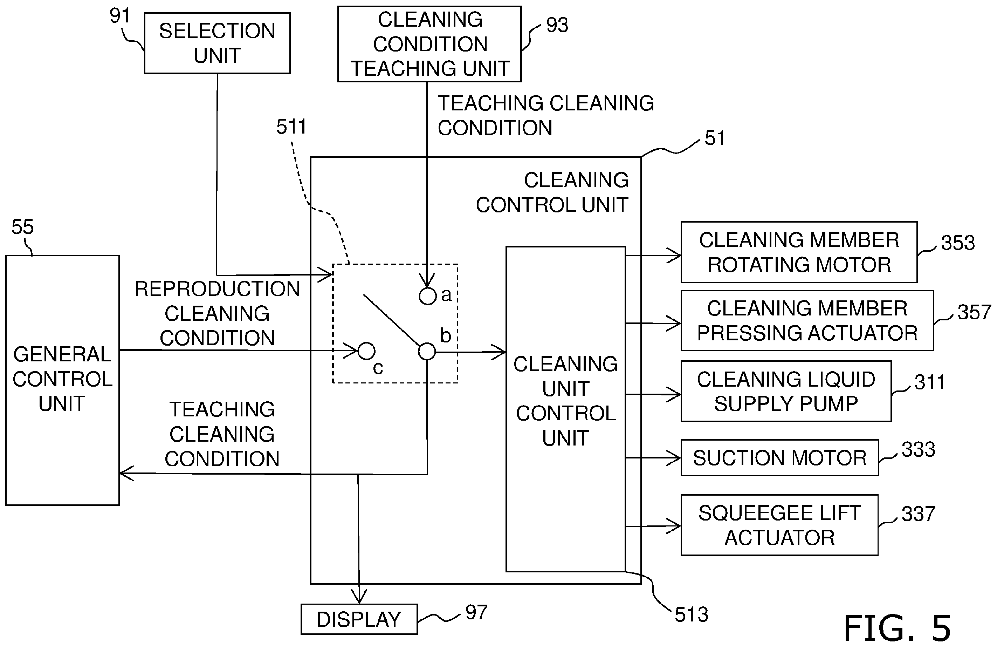

With reference to Fig. 5, a structure of a cleaning control unit 51 that controls the cleaning unit 3 is described in detail. Fig. 5 is a diagram illustrating a detailed structure of the cleaning control unit. The cleaning control unit 51 includes a cleaning selection unit 511. The cleaning selection unit 511 has three terminals a, b, and c. The terminal a is connected to the cleaning condition teaching unit 93, the terminal b is connected to a cleaning unit control unit 513 and a general control unit 55, and the terminal c is connected to the general control unit 55. If the setting unit 9 includes the display 97, the terminal b may be connected to the display 97.

The cleaning selection unit 511 selects a connection between the terminal b and the terminal a or a connection between the terminal b and the terminal c, based on the operation mode selected by the selection unit 91, and thus determines which one of teaching cleaning conditions and reproduction cleaning conditions should be output to the cleaning unit control unit 513.

Specifically, if the manual operation mode (including the manual operation teaching mode) is selected by the selection unit 91, the cleaning selection unit 511 connects the terminal a and the terminal b, so as to connect the cleaning condition teaching unit 93 to the cleaning unit control unit 513 and the general control unit 55. In this way, when executing the manual operation mode or the manual operation teaching mode, the cleaning selection unit 511 can send the teaching cleaning conditions set by the cleaning condition teaching unit 93 to the cleaning unit control unit 513 and the general control unit 55. In addition, if the display 97 is connected to the terminal b, the teaching cleaning conditions can be displayed on the display 97.

On the other hand, if the autonomous cleaning mode is selected by the selection unit 91, the cleaning selection unit 511 connects the terminal b and the terminal c, so as to connect the general control unit 55 to the cleaning unit control unit 513. In this way, when executing the autonomous cleaning mode, the cleaning selection unit 511 can send the reproduction cleaning conditions output from the general control unit 55 to the cleaning unit control unit 513. In addition, if the display 97 is connected to the terminal b, the reproduction cleaning conditions can be displayed on the display 97.

Based on the received teaching cleaning conditions or reproduction cleaning conditions, the cleaning unit control unit 513 calculates control quantities to be output to a cleaning member rotating motor 353, a cleaning member pressing actuator 357, the cleaning liquid supply pump 311, and/or the suction motor 333, so as to output drive powers corresponding to the control quantities to the above-mentioned motor, pump, and/or actuator.

Specifically, based on the cleaning power W to the floor surface F as the cleaning condition, the cleaning unit control unit 513 calculates rotational frequency of the cleaning member rotating motor 353, and/or pressing force of the cleaning member pressing actuator 357, so as to output drive powers corresponding to the rotational frequency and the pressing force to the cleaning member rotating motor 353 and the cleaning member pressing actuator 357, respectively, thereby controls cleaning power of the cleaning member 35 to the floor surface F.

Based on the supply amount S of the cleaning liquid as the cleaning condition, the cleaning unit control unit 513 calculates cleaning liquid flow rate of the cleaning liquid supply pump 311, so as to output the drive power corresponding to the flow rate to the cleaning liquid supply pump 311, thereby controlling the cleaning liquid amount discharged from the cleaning liquid discharge port 31.

Based on the suction force P as the cleaning condition, the cleaning unit control unit 513 calculates rotational frequency (and/or output) of the suction motor 333, so as to output the drive power corresponding to the rotational frequency (and/or output) to the suction motor 333, thereby controlling the suction force at the suction port O2. The cleaning unit control unit 513 outputs a drive signal to move the squeegee 33 up and down to the actuator, so that it can move the squeegee 33 up and down.

The cleaning member 35 is connected to the cleaning member pressing actuator 357 via a pressing member 355. In this way, the cleaning member 35 is pressed to the floor surface F and rotates so that it can clean the floor surface F. By adjusting the rotational frequency of the cleaning member rotating motor 353 and the pressing force of the cleaning member pressing actuator 357, the cleaning power of the cleaning member 35 to the floor surface F can be adjusted. As the cleaning member 35, a floor surface cleaning brush or the like can be used, for example.

As the cleaning unit 3 has the structure described above, the cleaning machine 100 can perform various cleaning operations, such as cleaning of the floor surface F and collecting liquid (cleaning liquid) on the floor surface F.

### (4-3) Structure of Travel Control Unit

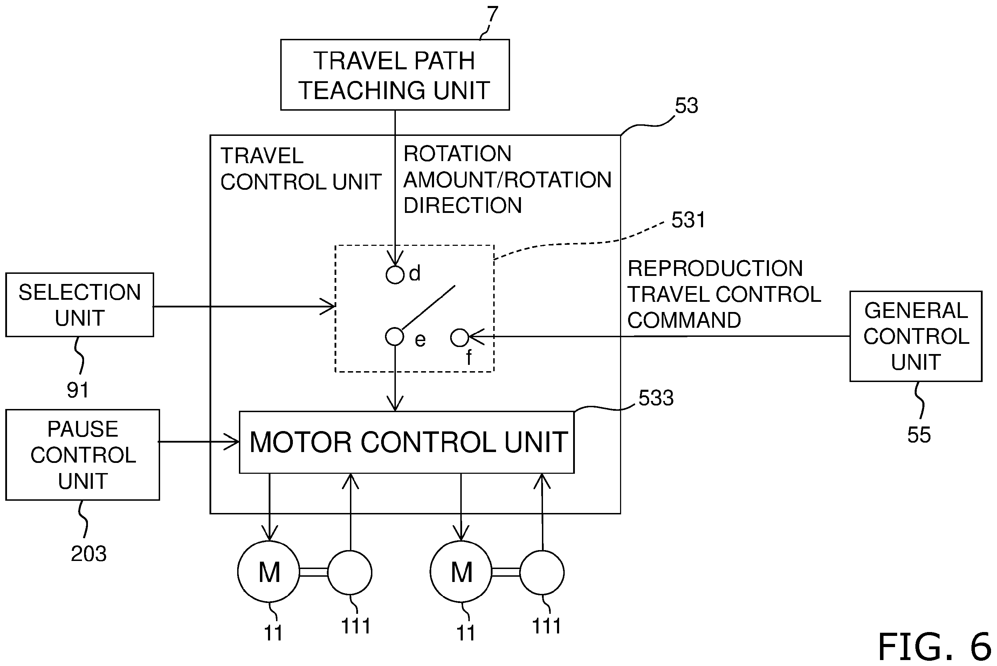

With reference to Fig. 6, a structure of a travel control unit 53 is described in detail. Fig. 6 is a diagram illustrating a detailed structure of the travel control unit. The travel control unit 53 includes a travel selection unit 531. The travel selection unit 531 has three terminals d, e, and f. The terminal d is connected to the travel path teaching unit 7, the terminal e is connected to the motor control unit 533, and the terminal f is connected to the general control unit 55.

Based on the operation mode selected by the selection unit 91, the travel selection unit 531 selects a connection between the terminal e and the terminal d or a connection between the terminal e and the terminal f. Specifically, if the manual operation mode is selected by the selection unit 91, the travel selection unit 531 connects the terminal e and the terminal d, so as to connect the travel path teaching unit 7 and the motor control unit 533. In this way, when executing the manual operation mode or the manual operation teaching mode, the travel selection unit 531 can send to the motor control unit 533 a signal indicating the rotation amounts and/or the rotation directions of the handles 71a and 71b of the travel path teaching unit 7.

On the other hand, if the autonomous cleaning mode is selected by the selection unit 91, the travel selection unit 531 connects the terminal e and the terminal f, so as to connect the general control unit 55 and the motor control unit 533. In this way, when executing the autonomous cleaning mode, the travel selection unit 531 can send to the motor control unit 533 a reproduction travel control command output from the general control unit 55.

Based on the input rotation amounts and rotation directions of the handles 71a and 71b, or the reproduction travel control command, the motor control unit 533 calculates target rotation speed of the travel motor 11, and outputs to the travel motor 11 a drive power to rotate the travel motor 11 at the target rotation speed. The motor control unit 533 calculates and feeds back actual rotation speed of the travel motor 11 based on the pulse signal from the encoder 111, and calculates drive power to be output to the travel motor 11. Therefore, the motor control unit 533 controls the travel motor 11 using a proportional integral (PI) control theory, a proportional integral differential (PID) control theory, or the like, for example.

In this embodiment, the travel motor 11 and the main wheel 13 are mounted to each of the left and right ends of the bottom part of the main body B. In this case, the motor control unit 533 controls the rotation speeds and the rotation directions of the left and right travel motors 11 independently, so as to determine the travel direction of the cleaning machine 100.

In another embodiment, if the control unit 5 is constituted of a plurality of computer systems, the motor control unit 533 may be one of the computer systems. In other words, it may be possible that one computer system realizes only the function of the motor control unit 533. In this case, the motor control unit 533 is a motor control device using the PI control theory or the PID control theory, for example.

### (4-4) Structure of General Control Unit

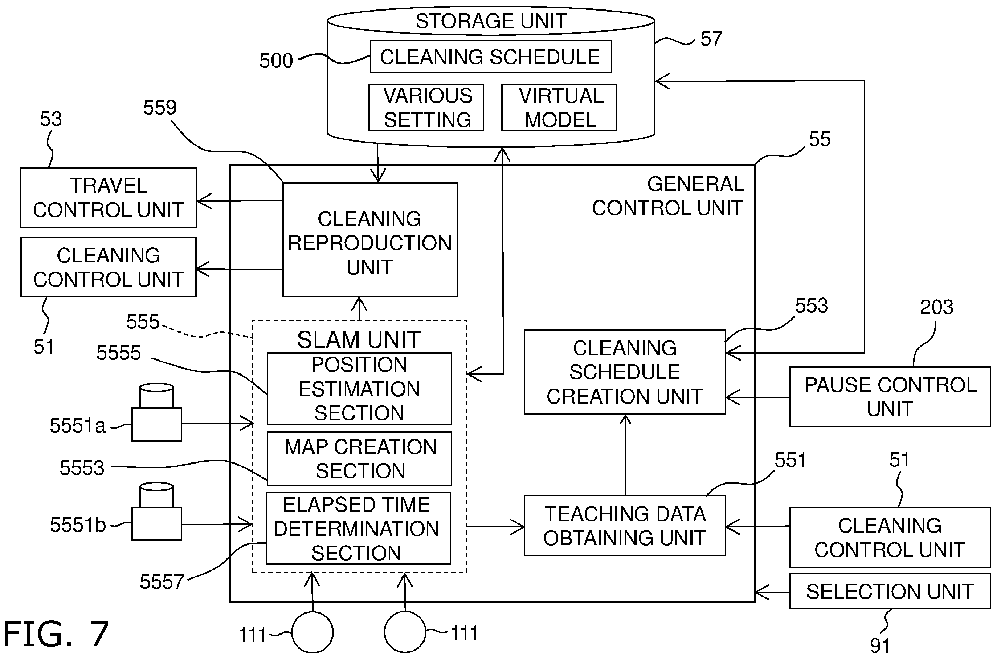

With reference to Fig. 7, a structure of the general control unit 55 is described in detail. Fig. 7 is a diagram illustrating a detailed structure of the general control unit. The general control unit 55 includes a teaching data obtaining unit 551. When executing the manual operation teaching mode, the teaching data obtaining unit 551 obtains teaching position information and teaching cleaning conditions at teaching data obtaining time. Specifically, the teaching data obtaining unit 551 receives the teaching data obtaining time and the teaching position information from an SLAM unit 555 (described later), and receives the teaching cleaning conditions at the teaching data obtaining time from the cleaning control unit 51. As the teaching data obtaining time, system clock of the control unit 5 can be used, for example. The teaching data obtaining unit 551 outputs to a cleaning schedule creation unit 553 the obtained teaching data obtaining time, teaching position information, and teaching cleaning conditions.

The cleaning schedule creation unit 553 associates the teaching position information, the teaching cleaning conditions, and the teaching data obtaining time obtained from the teaching data obtaining unit 551 with each other, creates a cleaning schedule 500 (an example of the stored information), and stores the same in a storage unit 57.

The SLAM unit 555 estimates information about position on a predetermined coordinate (position information) of the cleaning machine 100, based on information about an obstacle in front of the cleaning machine 100 obtained by a front detector 5551a (Fig. 1) disposed at the front part of the main body B, information about an obstacle in rear of the cleaning machine 100 obtained by a rear detector 5551b (Fig. 1) disposed at the rear part of the main body B, and rotation amount of the travel motor 11 obtained by the encoder 111.

The front detector 5551a and the rear detector 5551b are laser range finders (LRF) having a detection range of 180 degrees or more. If the laser range finder is used as the front detector 5551a and the rear detector 5551b, it obtains a distance between travel unit 1 and an obstacle and a direction to the obstacle, as the information about the obstacle.

The general control unit 55 includes a cleaning reproduction unit 559. When executing the autonomous cleaning mode, the cleaning reproduction unit 559 calculates the reproduction cleaning conditions and the reproduction travel control command at a predetermined elapsed time from start of execution of the autonomous cleaning mode, based on the teaching data obtaining time, the teaching cleaning conditions, and the teaching position information stored in the cleaning schedule 500, so as to output them to the cleaning control unit 51 and the travel control unit 53, respectively.

### (4-5) Structure of SLAM Unit

With reference to Fig. 7, a structure of the SLAM unit 555 is described in detail. The SLAM unit 555 performs estimation of position (position information) of the cleaning machine 100 and creation of the map information by using a simultaneous localization and mapping (SLAM) method. The SLAM unit 555 includes a map creation section 5553. The map creation section 5553 creates the map information using information about a front obstacle (such as a wall) obtained by the front detector 5551a and information about a rear obstacle obtained by the rear detector 5551b. The map information is used when a position estimation section 5555 estimates the position information. As the map information, there are a local map and a global map.

The local map is map information about (positions of) obstacles around the cleaning machine 100. The local map is created as necessary by coordinate conversion of the information about the front obstacle obtained by the front detector 5551a and the information about the rear obstacle obtained by the rear detector 5551b.

The global map is map information about (positions of) obstacles existing in an environment (movement environment) in which the cleaning machine 100 moves when cleaning the floor surface F. The global map is created based on the local map obtained when executing the manual operation teaching mode. Therefore, the local map is associated with time when it is obtained (e.g., the teaching data obtaining time) and is stored in the storage unit 57.

In another embodiment, the local map may be stored in the storage unit 57 in association with the estimated position of the cleaning machine 100 when it is obtained.

In still another embodiment, the global map may be created by using dedicated software or a CAD. In this case, the global map created by the software or the like is converted into data readable by the control unit 5 of the cleaning machine 100.

The map creation section 5553 locates a local map associated with a certain elapsed time and a local map associated with a time near the certain elapsed time, at positions of the cleaning machine 100 at the elapsed times (locates the centers of the local maps at positions of the cleaning machine 100 at the corresponding elapsed times), so as to create map information indicating a part of the movement environment (e.g., a range necessary for position estimation), as the global map. In addition, the map creation section 5553 deletes a part of the global map created in the past, which becomes unnecessary for position estimation.

In another embodiment, if a "circular path problem" (a problem that a part of the global map created in the initial stage is not identical to a part of the global map created in the final stage), such as a case where the movement environment does not form a circular path, does not occur, map information indicating the entire movement environment may be created as the global map.

The SLAM unit 555 includes the position estimation section 5555. The position estimation section 5555 estimates position information about position of the cleaning machine 100 on a predetermined coordinate, based on the global map created by the map creation section 5553, the local map, and the rotation amount of the travel motor 11 output from the encoder 111.

Specifically, the position information is estimated as follows. Here, as an example, suppose a case in which the cleaning machine 100 moves from a (estimated) position at a predetermined time point (referred to as time point tk) to reach a position at the next time point (referred to as time point tk+1), and the latter position is to be estimated.

First, the position estimation section 5555 calculates rotation amount of the main wheel 13 between time point tk and time point tk+1 from the number of pulses output from the encoder 111 between time point tk and time point tk+1, and estimates movement length of the cleaning machine 100 due to rotation of the main wheel 13 based on the rotation amount (dead reckoning).

Next, the position estimation section 5555 moves posterior probability at time point tk (corresponding to probability distribution indicating a relationship between the position of the cleaning machine 100 and a probability that the cleaning machine 100 exists at the position at time point tk) by the movement length of the cleaning machine 100 due to rotation of the main wheel 13, so as to calculate prior probability at time point tk+1.

After that, the position estimation section 5555 obtains the local map and the global map at time point tk+1 from the map creation section 5553, and estimates position information of the cleaning machine 100 at time point tk+1 by map matching between the local map and the global map at time point tk+1.

Specifically, for example, on the global map, the local map at time point tk+1 is located at some positions near the estimated position calculated based on rotation amount of the main wheel 13, and the local map is rotated about the center thereof if necessary (e.g., if the direction of the cleaning machine 100 is changed), and the map matching is performed.

Based on a result of the map matching, the position estimation section 5555 calculates likelihood (corresponding to a relationship between a position at which the local map information is located and a matching degree between the global map and the local map information at the position).

After that, the position estimation section 5555 multiplies the likelihood by the prior probability at time point tk+1, so as to calculate the posterior probability at time point tk+1. The position estimation section 5555 estimates the position when the posterior probability at time point tk+1 becomes maximum, namely the position at which the cleaning machine 100 is estimated to exist with the highest probability, to be the position (position information) of the cleaning machine 100 at time point tk+1. The posterior probability at time point tk+1 is used as the prior probability in the next position estimation.

As described above, the position estimation section 5555 uses the movement length based on rotation amount of the main wheel 13 and map information obtained using the front detector 5551a and the rear detector 5551b, so as to perform position estimation. Thus, it is possible to perform accurate position estimation, by complementarily reducing an error included in the movement length based on rotation amount of the main wheel 13 (mainly due to slip between the main wheel 13 and the floor surface F), and an error included in the map information (mainly due to noise components included in the information obtained by the front detector 5551a and the rear detector 5551b).

The SLAM unit 555 includes an elapsed time determination section 5557. The elapsed time determination section 5557 determines the teaching data obtaining time and elapsed time from start of execution of the autonomous cleaning mode. In this embodiment, the elapsed time determination section 5557 determines teaching data obtaining time using a clock function of a microcomputer system constituting the control unit 5, for example.

On the other hand, the elapsed time from start of execution of the autonomous cleaning mode is determined based on the position information estimated by the position estimation section 5555. Specifically, for example, the elapsed time is determined as the teaching data obtaining time associated with position information that is closest to position information of the cleaning machine 100 estimated by the position estimation section 5555, among position information stored in the cleaning schedule 500.

As the elapsed time from the start of execution of the autonomous cleaning mode is determined based on position information estimated by the position estimation section 5555, the cleaning machine 100 can autonomously reproduce the cleaning operation while accurately recognizing timing and place to execute the taught teaching cleaning conditions, when executing the autonomous cleaning mode.

### (4-6) Operation of Pause Control Unit

As illustrated in Fig. 7, the pause control unit 203 can control the cleaning schedule creation unit 553 of the general control unit 55. Furthermore, as illustrated in Fig. 6, the pause control unit 203 can control the motor control unit 533 of the travel control unit 53.

When the stopping operation of the pause switch 201 is performed during the teaching travel, the pause control unit 203 controls the motor control unit 533 to stop traveling of the main body B. In addition, the pause control unit 203 controls the cleaning schedule creation unit 553 to stop storing the teaching position information and the teaching data obtaining time in the storage unit 57 (i.e., to stop creating the cleaning schedule 500). Note that the timing to stop traveling of the main body B and stop creating the cleaning schedule 500 can be determined and changed by the pause control unit 203 according to input from the setting operation unit 95. Note that the cleaning machine 100 is moved by user's moving operation during non-pause, but it is not moved during pause even by the moving operation.

If resuming operation of the pause switch 201 is performed during the pause described above, the cleaning machine 100 can be moved. Further, when the user operates the travel path teaching unit 7 to control the motor control unit 533, traveling of the main body B is resumed. In addition, the pause control unit 203 causes the cleaning schedule creation unit 553 to resume storing the teaching position information and the teaching data obtaining time in the storage unit 57 (i.e., to resume creating the cleaning schedule 500). Note that the timing to resume traveling of the main body B and creating the cleaning schedule 500 can be determined and changed by the pause control unit 203 according to input from the setting operation unit 95.

In the cleaning schedule 500, vertical movement of the squeegee 33, suction operation from the squeegee 33, discharge of water, and the like are recorded as operations of the cleaning machine 100. Therefore, if the stopping operation of the pause switch 201 is performed, the pause control unit 203 also controls the cleaning schedule creation unit 553 to stop recording the above operation. In addition, if the resuming operation of the pause switch 201 is performed, recording of the above operation is resumed.

### (5) Operation of Autonomous Travel Type Floor Cleaning Machine

### (5-1) Basic Operation

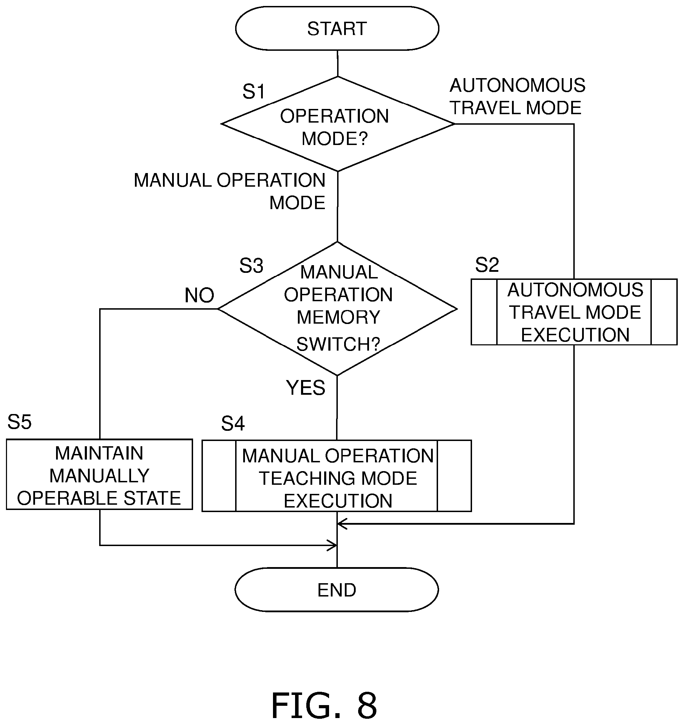

With reference to Fig. 8, a basic operation of the cleaning machine 100 is described. Fig. 8 is a flowchart illustrating a basic operation of the cleaning machine. In Step S1, when the cleaning machine 100 starts its operation, the control unit 5 checks the state of the selection unit 91. If "automatic" is selected by the selection unit 91, the process proceeds to Step S2. If "manual" is selected by the selection unit 91, the process proceeds to Step S3.

In Step S2, the cleaning machine 100 autonomously performs the cleaning operation according to the cleaning schedule 500 stored in the storage unit 57.

In Step S3, it is determined whether or not the manual operation memory switch 92 is pressed during execution of the manual operation mode. If the manual operation memory switch 92 is pressed, the process proceeds to Step S4. If the manual operation memory switch 92 is not pressed, the process proceeds to Step S5.

In Step S4, the control unit 5 changes the operation mode to the manual operation teaching mode. As a result, operator's cleaning operation after the timing when the manual operation memory switch 92 is pressed is stored as the cleaning schedule 500.

In Step S5, the execution of the manual operation mode is maintained, in which the cleaning operation of the cleaning machine 100 due to the operator's operation is not stored.

In Step S4 described above, while executing the manual operation teaching mode, the control unit 5 monitors whether or not the manual operation memory switch 92 is pressed. If the manual operation memory switch 92 is pressed during execution of the manual operation teaching mode, the manual operation teaching mode is finished at the timing, and the operation mode is changed to the manual operation mode, in which the cleaning operation after the timing is not stored in the cleaning schedule 500. In other words, by pressing the manual operation memory switch 92 during execution of the manual operation teaching mode, the operator can stop the storing (teaching) at any timing during the cleaning operation.

As described above, the cleaning machine 100 according to this embodiment can execute the autonomous cleaning mode, the manual operation mode, or the manual operation teaching mode, in accordance with selection of the operation mode by the selection unit 91 and whether or not the manual operation memory switch 92 is pressed.

### (5-2) Operation of Manual Operation Teaching Mode

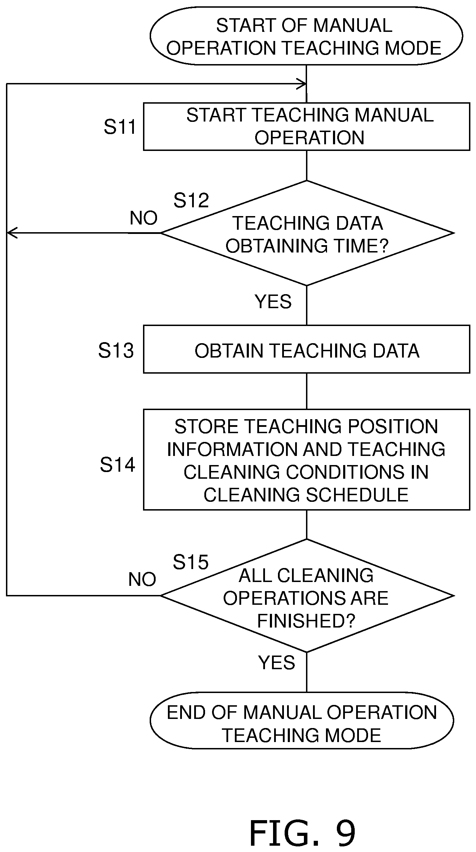

With reference to Fig. 9, the manual operation teaching mode (Step S4 in Fig. 8) is described. Fig. 9 is a flowchart illustrating an operation of the manual operation teaching mode. In Step S11, for example, when starting the manual operation of the cleaning machine 100 after the manual operation memory switch 92 is pressed, or when the manual operation memory switch 92 is pressed during the manual operation, the manual operation teaching is started. In other words, creation of the cleaning schedule 500 is started.

Specifically, at timing (elapsed time: 0) when the manual operation memory switch 92 is pressed, the teaching data obtaining unit 551 receives the supply amount S of the cleaning liquid, the suction force P, and the cleaning power W, which are respectively output to the cleaning liquid supply pump, the suction motor 333, and the cleaning member rotating motor 353 and the cleaning member pressing actuator 357, from the cleaning control unit 51 at the timing, as the teaching cleaning conditions at elapsed time 0. In addition, it instructs the position estimation section 5555 to estimate position information of the cleaning machine 100 at elapsed time 0, and receives the estimated position information as the teaching position information.

The cleaning schedule creation unit 553 receives the teaching position information and the teaching cleaning conditions at elapsed time 0 from the teaching data obtaining unit 551, and associates the teaching position information and the teaching cleaning conditions with elapsed time 0 so as to store them in the storage unit 57, as the cleaning schedule 500.

In Step S12, the teaching data obtaining unit 551 monitors elapsed time determined by the elapsed time determination section 5557, and determines whether or not the elapsed time is the teaching data obtaining time. If it is the teaching data obtaining time, the process proceeds to Step S13.

In Step S13, it receives from the position estimation section 5555 position information at the teaching data obtaining time as the teaching position information, and receives from the cleaning control unit 51 cleaning conditions at the teaching data obtaining time as the teaching cleaning conditions. In this way, it can obtain the teaching position information and the teaching cleaning conditions every period of the teaching data obtaining time. The teaching data obtaining time can be the timing of every predetermined time (e.g., 500 ms) from pressing the manual operation memory switch 92, for example.

In Step S14, the cleaning schedule creation unit 553 associates the teaching position information and the teaching cleaning conditions obtained by the teaching data obtaining unit 551 with the teaching data obtaining time when obtaining them, and stores them in the cleaning schedule 500.

Steps S11 to S14 described above are repeatedly executed until the operator's cleaning operation is finished (until "Yes" in Step S15), and thus, the teaching position information and the teaching cleaning conditions from start to end of the operator's cleaning operation can be stored as the cleaning schedule 500.

The end of the cleaning operation (storing thereof) can be commanded by pressing the manual operation memory switch 92 during execution of the manual operation teaching mode. In another embodiment, it may be possible that the end of the cleaning operation (storing thereof) can be commanded also when emergency stop is commanded with an emergency stop button or the like.

### (5-3) Operation in Autonomous Cleaning Mode

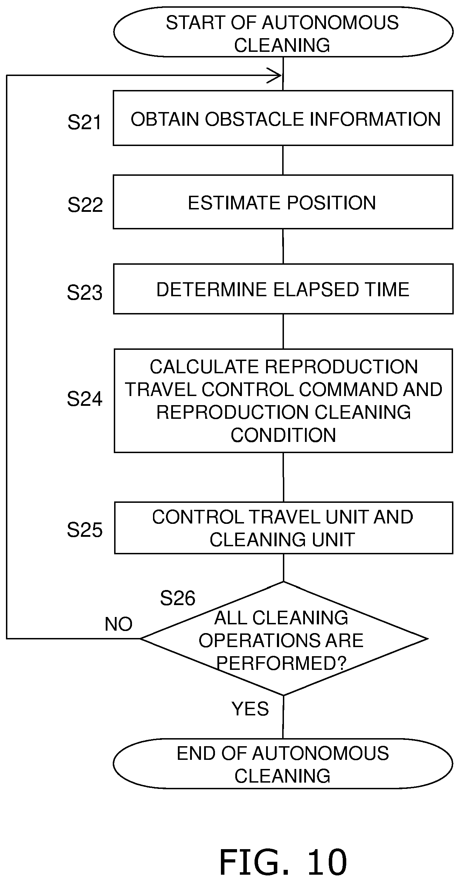

With reference to Fig. 10, there is described the autonomous cleaning mode in which the taught cleaning operation is reproduced (Step S2 in Fig. 8). Fig. 10 is a flowchart illustrating an operation of the cleaning machine when executing the autonomous cleaning mode. It is supposed that the cleaning operation from start of execution of the autonomous cleaning mode until elapsed time tn-1 has been performed. Here, n indicates n-th autonomous cleaning control.

In Step S21, the SLAM unit 555 first obtains information about a front obstacle and information about a rear obstacle from the front detector 5551a and the rear detector 5551b.

In Step S22, the position estimation section 5555 estimates position of the cleaning machine 100 on the x-y coordinate, based on rotation amount of the travel motor 11 measured by the encoder 111, the global map, and the local map obtained based on the information obtained in Step S21 (Step S22). For instance, it is supposed that position of the cleaning machine 100 is estimated to be (xn', yn', θn') on the x-y coordinate.

In Step S23, after position of the cleaning machine 100 is estimated, the elapsed time determination section 5557 determines elapsed time tn from start of execution of the autonomous cleaning mode.

In Step S24, the cleaning reproduction unit 559 calculates the reproduction travel control command and the reproduction cleaning conditions at elapsed time tn as follows.

It is supposed that elapsed time tn is (closest to) the teaching data obtaining time TL. In this case, the cleaning reproduction unit 559 reads out position information (xL+1, yL+1, θL+1) associated with next teaching data obtaining time TL+1 from the cleaning schedule 500, and calculates the reproduction travel control command at elapsed time tn, based on the difference (xL+1 - xn', yL+1 - yn', θL+1 - θn') between the estimated position information and the target position information.

On the other hand, the cleaning reproduction unit 559 reads out cleaning conditions (SL, WL, PL) associated with the teaching data obtaining time TL from the cleaning schedule 500, and determines the cleaning conditions (SL, WL, PL) to be the reproduction cleaning conditions at elapsed time tn.

In Step S25, the cleaning reproduction unit 559 outputs the reproduction travel control command to the travel control unit 53, and outputs the reproduction cleaning conditions to the cleaning control unit 51. When executing the autonomous cleaning mode, the terminal e and the terminal f of the travel selection unit 531 are connected to each other, and hence the reproduction travel control command is sent to the motor control unit 533 via the travel selection unit 531. The motor control unit 533 controls the travel motor 11 based on the received reproduction travel control command.

On the other hand, in the cleaning selection unit 511, the terminal b and the terminal c are connected to each other, and hence the reproduction cleaning conditions are sent to the cleaning unit control unit 513 via the cleaning selection unit 511. The cleaning unit control unit 513 controls the cleaning unit 3 based on the received reproduction cleaning conditions.

In Step S26, after controlling the travel unit 1 and the cleaning unit 3 based on the reproduction travel control command and the reproduction cleaning conditions, respectively, the cleaning reproduction unit 559 checks whether or not all the cleaning operations stored in the cleaning schedule 500 are performed. Whether or not all the cleaning operations stored in the cleaning schedule 500 are finished can be checked by detecting an identifier at the end of the cleaning schedule 500 (such as an identifier indicating "end of file"), for example.

As long as it is determined that all the cleaning operations stored in the cleaning schedule 500 are not performed, Steps S21 to S25 described above are repeatedly executed. When it is determined that all the cleaning operations stored in the cleaning schedule 500 are performed ("Yes" in Step S26), the execution of the reproduction cleaning mode is finished. In this way, the cleaning machine 100 can faithfully reproduce the cleaning operation stored in the cleaning schedule 500.

By executing Steps S21 to S26 described above, the cleaning reproduction unit 559 calculates the reproduction cleaning conditions and the reproduction travel control command based on the cleaning schedule 500 created by the cleaning schedule creation unit 553, and outputs them to the cleaning unit 3 and the travel unit 1, respectively, thereby causes the cleaning machine 100 to autonomously perform the cleaning operation.

### (6) Travel Teaching Recording Control Operation

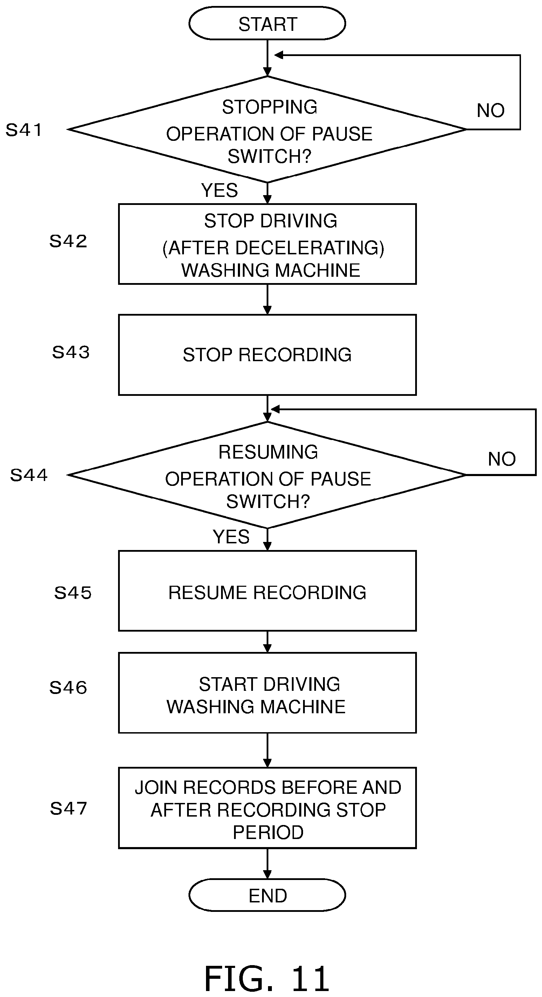

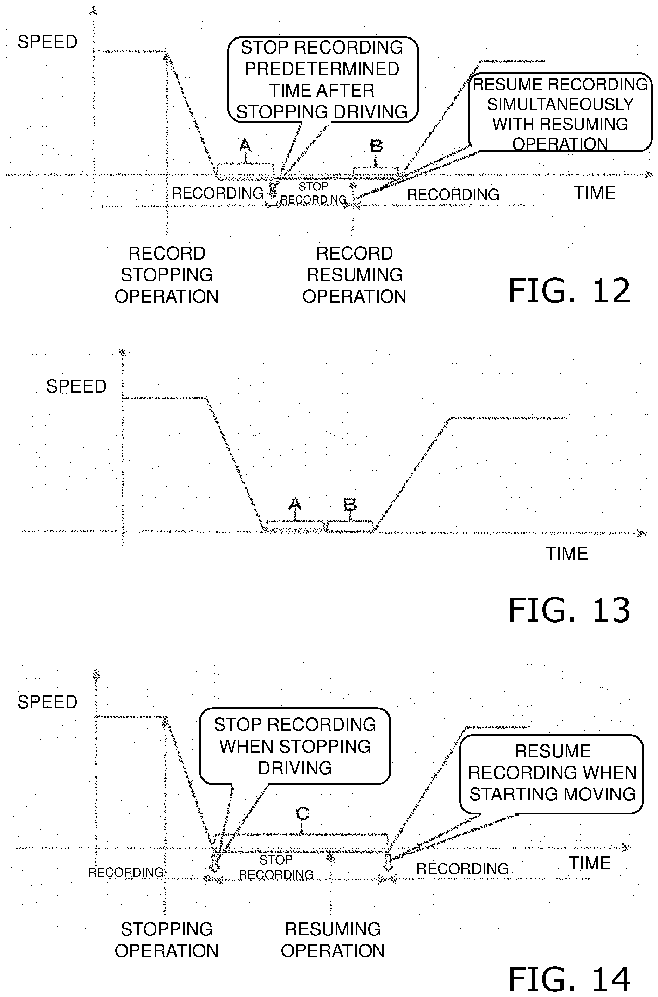

With reference to Figs. 11 to 13, a control operation of the travel teaching recording method according to the first embodiment is described. Fig. 11 is a flowchart illustrating a control operation of the travel teaching recording method according to the first to fourth embodiments. Fig. 12 is a graph illustrating the relationship between time and speed in the teaching travel. Fig. 13 is a graph illustrating the relationship between time and speed in the reproduction travel. Note that the following description is an example of a case where the autonomous reproduction travel is copy travel (the same is true in the first to fourth embodiments).

As illustrated in Fig. 11, the travel teaching recording method of the first embodiment includes the steps as follows. In Step S41, it is determined whether or not the operator has performed the stopping operation of the pause switch 201. Specifically, the pause control unit 203 performs the above determination. If the stopping operation is performed, the process proceeds to Step S42.

In Step S42, travel stopping operation of the cleaning machine 100 is performed. Specifically, the cleaning machine 100 reduces its speed and stops (its travel speed becomes substantially zero). The operation described above is performed when the pause control unit 203 controls the motor control unit 533.

In Step S43, the recording is stopped. Specifically, the above operation is performed when the pause control unit 203 controls the cleaning schedule creation unit 553 to stop recording of the cleaning schedule 500. In this embodiment, the recording is stopped at a predetermined time after stopping traveling of the cleaning machine 100 (complete stop after reducing speed in Step S42).

In Step S44, it is determined whether or not the resuming operation of the pause switch 201 has been performed. Specifically, the pause control unit 203 performs the above determination.

In Step S45, the recording is resumed. Specifically, the above operation is performed when the pause control unit 203 controls the cleaning schedule creation unit 553 to resume recording of the cleaning schedule 500. In this embodiment, the recording is resumed simultaneously with the operator's resuming operation of the pause switch 201.

In Step S46, the traveling of the cleaning machine 100 is started. Specifically, after a predetermined time elapses from the resuming operation of the pause switch 201, the cleaning machine 100 starts increasing speed. The above operation is realized when the pause control unit 203 controls the motor control unit 533.

In Step S47, the record before stopping recording and the record after resuming recording are joined and stored in the storage unit 57. In other words, the cleaning schedule creation unit 553 joins the records so as to create the cleaning schedule 500. As a result, information of speed and position in the teaching travel illustrated in Fig. 11 is realized as the cleaning schedule 500 for performing the operation illustrated in Fig. 12.

### (6-1) Common Effect of First to Fourth Embodiments

In this method, when the operator performs the stopping operation of the pause switch 201 in the teaching travel, the travel stopping operation of the cleaning machine 100 and stopping recording are performed. In addition, when the operator performs resuming operation of the pause switch 201 in the teaching travel, traveling of the cleaning machine 100 is started and the recording is started. In the recording, the record before stopping recording and the record after resuming recording are joined.

Therefore, in the copy travel, using the record in which record before stopping recording and record after stopping recording are joined, the cleaning machine 100 can travel. In other words, in the copy travel, the problem that position and speed of the cleaning machine 100 become discontinuous does not occur. As a result, in the reproduction travel, the cleaning machine 100 can smoothly travel when traveling based on the record before stopping recording and the record after resuming recording in the teaching travel.

As the conventional problem is solved as described above, there is another effect that evacuation of obstacles on the path or other work can be performed after stopping the cleaning machine 100 during the teaching travel. In addition, the operator can wait for another person or object to pass or can leave for checking a route or resting during the teaching travel.

As still another effect, in this embodiment, in the above case, the operator can perform the travel stopping operation and stopping recording with the pause switch 201, so that the above obstacle information is not left in the map. Conventionally, in the teaching travel, a person's locus may be left on the map when the person passes by in a public space or the like, and an operation to avoid the left person's locus as an obstacle will occur. In addition, as unnecessary information is left in the map, navigation performance is deteriorated. However, in this embodiment, such problems are solved. This effect can be obtained not only in the case of copy travel but also in an outer periphery direct teaching (filling travel).

### (6-2) Effect of First Embodiment

In the first embodiment, stopping recording (Step S43) is performed a predetermined time after stopping traveling (complete stop after reducing speed in Step S42), and resuming recording (Step S45) is performed simultaneously with the resuming operation of the pause switch 201 (Yes in Step S44). Therefore, the stop state (time range A, B in Fig. 12) after releasing stop of the cleaning machine 100 until starting traveling is recorded.

In the copy travel, as illustrated in Fig. 13, the cleaning machine 100 starts traveling after a while from sudden stop (after the time ranges A and B in Fig. 13 have elapsed). In other words, the cleaning machine 100 stops securely. Furthermore, for example, inertia or delay in response to steering can occur in a condition such as turning left, stopping, and turning right. However, in this embodiment, rapid start after sudden stop does not occur, and hence, the cleaning machine 100 can move easily to follow a locus. In other words, in the copy travel, traveling and operation of the cleaning machine 100 are stable.

Furthermore, due to the above operation, the cleaning machine 100 can realize desirable operations. Specifically, in the copy travel, at a place to pause, it can reproduce a preparation operation such as moving up and down the cleaning member 35 that is a brush in the time range B, for example. In other words, in the teaching travel, when teaching an operation to move down the cleaning member 35 and then to start traveling in the time range B after the resuming operation of the pause switch 201, operation time to move down the cleaning member 35 is secured. Therefore, in the copy travel, it is possible to move the cleaning machine 100 after the cleaning member 35 is completely moved down. As a result, cleaning quality is not deteriorated.

### 2. Second Embodiment

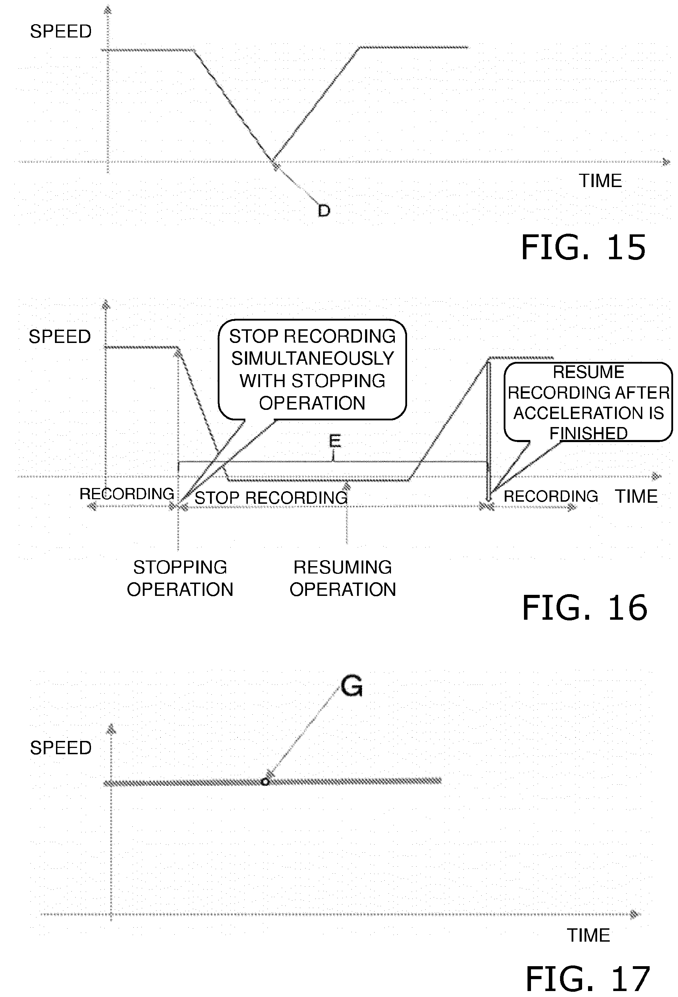

With reference to Figs. 11, 14 to 15, a control operation of the travel teaching recording method according to a second embodiment is described. Fig. 14 is a graph illustrating the relationship between time and speed in the teaching travel according to the second embodiment. Fig. 15 is a graph illustrating the relationship between time and speed in the reproduction travel according to the second embodiment.

Note that in the following description of the control operation, Fig. 11 of the first embodiment is used. However, the pause control unit 203 stops traveling of the cleaning machine 100 (Step S42), and controls timing to stop recording in the storage unit 57 (Step S43). Further, it starts traveling of the cleaning machine 100 (Step S45), and controls timing to resume recording in the storage unit 57 (Step S45). Therefore, timings thereof can be set to be different from each other (the same is true for the second to fourth embodiments).

The travel teaching recording method of the second embodiment includes the following steps. In Step S41, it is determined whether or not the operator has performed the stopping operation of the pause switch 201. Specifically, the pause control unit 203 performs the above determination. If the stopping operation is performed, the process proceeds to Step S42.

In Step S42, travel stopping operation of the cleaning machine 100 is performed. Specifically, the cleaning machine 100 reduces speed and stops (travel speed becomes substantially zero).

In Step S43, recording is stopped. In this embodiment, recording is stopped simultaneously with stopping traveling of the cleaning machine 100 (complete stop after reducing speed in Step S42).

In Step S44, it is determined whether or not the resuming operation of the pause switch 201 has been performed. Specifically, the pause control unit 203 performs the above determination.

In Step S45, recording is resumed. In this embodiment, recording is resumed simultaneously with starting traveling of the cleaning machine 100 (in Step S46 described later).

In Step S46, traveling of the cleaning machine 100 is started. Specifically, after a predetermined time elapses from the resuming operation of the pause switch 201, the user operates the travel path teaching unit 7 to control the motor control unit 533, thereby traveling of the main body B is resumed.

In Step S47, the record before stopping recording and the record after resuming recording are joined and stored in the storage unit 57.

In this embodiment, stopping recording (Step S43) is performed simultaneously with stopping traveling (complete stop after reducing speed in Step S42), and resuming recording (Step S45) is performed simultaneously with starting traveling (Step S46). Therefore, the stop state of the cleaning machine 100 (the state after stopping traveling until starting traveling, time range C in Fig. 14) is not recorded as the cleaning schedule 500. As a result of the above operation, in the reproduction travel, as illustrated in Fig. 15, the cleaning machine 100 stops once at the place to pause but soon starts to move (time point D in Fig. 15). In other words, stopped time (time loss) of the cleaning machine 100 can be minimized.

### 3. Third Embodiment

With reference to Figs. 11, 16 to 17, a control operation of the travel teaching recording method according to a third embodiment is described. Fig. 16 is a graph illustrating the relationship between time and speed in the teaching travel according to the third embodiment. Fig. 17 is a graph illustrating the relationship between time and speed in the reproduction travel according to the third embodiment.

The travel teaching recording method of the third embodiment includes the following steps. In Step S41, it is determined whether or not the operator has performed the stopping operation of the pause switch 201. Specifically, the pause control unit 203 performs the above determination. If the stopping operation is performed, the process proceeds to Step S42.

In Step S42, the travel stopping operation of the cleaning machine 100 is performed. Specifically, the cleaning machine 100 reduces speed and stops.

In Step S43, recording is stopped. In this embodiment, recording is stopped simultaneously with the operator's stopping operation of the pause switch 201.

In Step S44, it is determined whether or not the resuming operation of the pause switch 201 has been performed. Specifically, the pause control unit 203 performs the above determination.

In Step S45, the recording is resumed. In this embodiment, timing to resume recording is a predetermined time after starting traveling of the cleaning machine 100 (e.g., after acceleration is finished, i.e. after a constant speed is reached).

In Step S46, the traveling of the cleaning machine 100 is started. Specifically, after a predetermined time elapses from the resuming operation of the pause switch 201, the user operates the travel path teaching unit 7 to control the motor control unit 533, thereby traveling of the main body B is resumed.

In Step S47, the record before stopping recording and the record after resuming recording are joined and stored in the storage unit 57 as the cleaning schedule 500.

In this embodiment, recording is stopped simultaneously with the operator's stopping operation of the pause switch 201, and recording is resumed after the cleaning machine 100 finishes acceleration, i.e. after a constant speed is reached. Therefore, in the teaching travel, recording is not performed while the cleaning machine 100 decelerates, stops, and accelerates (time range E in Fig. 16). As a result, in the reproduction travel, as illustrated in Fig. 17, the cleaning machine 100 performs smooth travel and operation as if the pause in the teaching travel did not exist (Fig. 17 shows joint point G at which before and after records are joined). In other words, the cleaning machine 100 does not perform operations corresponding to deceleration and acceleration in the teaching travel, and further there is no stopped time (time loss).

In Step S47, specifically, there is executed a step of creating information for joining information of the recording stop position and information of the recording resume position. Specifically, during the teaching travel, linear interpolation between information of the recording stop position (position and speed) and information of the recording resume position (position and speed) is performed, so as to create a plurality of interpolation points. Then, in the autonomous travel, the record is edited by interpolation or the like so as to smoothly join position and speed between the recording stop position and the recording resume position.

Note that in the above editing, it may be possible to edit either or both before and after the period after the recording stop position until the recording resume position. Note that the interpolation of records is not limited to the linear interpolation, but a method of using a spline curve may be adopted, for example.

### 4. Fourth Embodiment

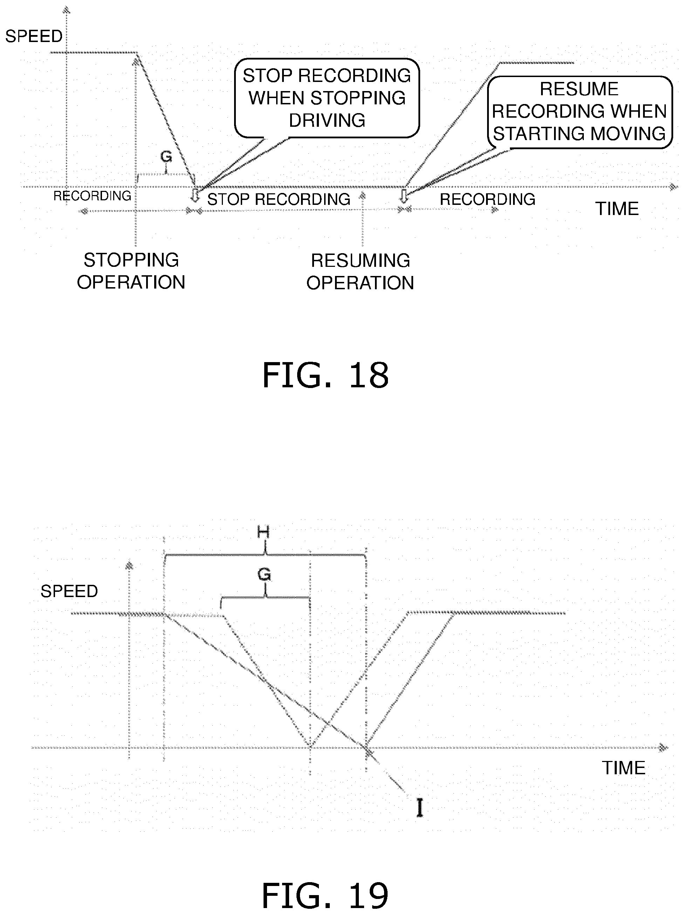

With reference to Figs. 11, 18 to 19, a control operation of the travel teaching recording method according to a fourth embodiment is described. Fig. 18 is a graph illustrating relationship between time and speed in the teaching travel according to the fourth embodiment. Fig. 19 is a graph illustrating the relationship between time and speed in the reproduction travel according to the fourth embodiment.

The travel teaching recording method of the fourth embodiment includes the following steps. In Step S41, it is determined whether or not the operator has performed the stopping operation of the pause switch 201. Specifically, the pause control unit 203 performs the above determination. If the stopping operation is performed, the process proceeds to Step S42.

In Step S42, traveling of the cleaning machine 100 is stopped. Specifically, the cleaning machine 100 reduces speed and stops (travel speed becomes zero).

In Step S43, recording is stopped. In this embodiment, recording is stopped simultaneously with stopping traveling of the cleaning machine 100.

In Step S44, it is determined whether or not the resuming operation of the pause switch 201 has been performed. Specifically, the pause control unit 203 performs the above determination.

In Step S45, recording is resumed. In this embodiment, recording is resumed simultaneously with starting traveling of the cleaning machine 100 (in Step S46 described later).

In Step S46, traveling of the cleaning machine 100 is started. Specifically, after a predetermined time elapses from the resuming operation of the pause switch 201, the user operates the travel path teaching unit 7 to control the motor control unit 533, thereby traveling of the main body B is resumed.

In Step S47, the record before stopping recording and the record after resuming recording are joined and stored in the storage unit 57.

In this embodiment, the cleaning schedule 500 after the operator's stopping operation of the pause switch 201 until stopping recording is edited (i.e., information of the cleaning schedule 500 is interpolated, for example, so as to smoothly join position, speed, and cleaning operation between the recording stop position and the recording resume position). Specifically, the cleaning schedule creation unit 553 edits the cleaning schedule 500 as described above. For instance, as illustrated in Fig. 18, the cleaning schedule 500 is edited so as to reduce deceleration after the operator's stopping operation of the pause switch 201 until stopping recording (deceleration time range G) (as described later).

In this embodiment, as described above, stopping recording (Step S43) is performed simultaneously with stopping traveling (complete stop after reducing speed in Step S42), and resuming recording (Step S45) is performed simultaneously with resuming travel (start acceleration in Step S46). Therefore, the stop state of the cleaning machine 100 (state after stopping traveling until starting travel) is not recorded. As a result, in the copy travel, as illustrated in Fig. 19, stopped time of the cleaning machine 100 can be minimized.

In this embodiment, as described above, the stored information is edited so as to reduce deceleration after the operator's stopping operation of the pause switch 201 until stopping recording (the deceleration time range G in Fig. 18). Specifically, under the condition that the stop position is the same before and after editing, in order to get desired deceleration, the start point of deceleration in the autonomous travel is shifted forward from that in the teaching travel. In this way, as illustrated in Fig. 19, deceleration time range H in the autonomous travel is longer than the deceleration time range G in the teaching travel, in back and forth.

Therefore, in the copy travel, as illustrated in Fig. 19, the cleaning machine 100 gently stops at the place to pause (time I in Fig. 19). In other words, sudden stop is prevented. Without sudden stop, slipping is prevented, and discomfort in appearance is reduced.

As described above, in the edition described above, both before and after the period after the stopping operation of the pause switch 201 until stopping recording are edited. However, it may be possible to edit only the period after the stopping operation of the pause switch 201 until stopping recording, or plus either one of before and after the period.

### 5. Fifth Embodiment

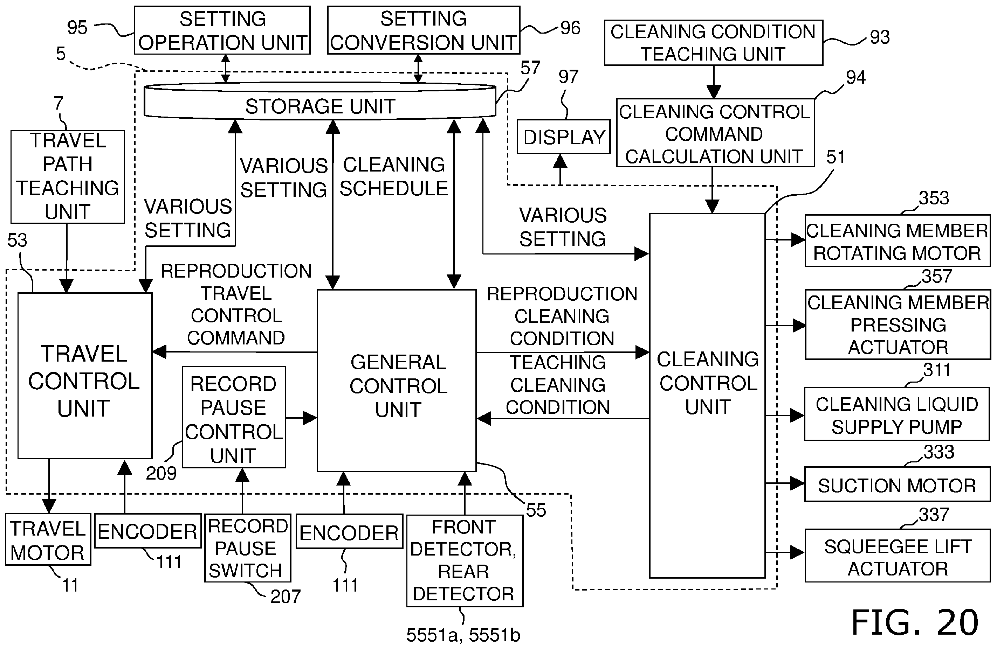

With reference to Fig. 20, an overall structure of the control unit 5 is described. Fig. 20 is a diagram illustrating an overall structure of the control unit according to a fifth embodiment. Note that a basic structure and a basic operation of the fifth embodiment are the same as those of the second embodiment, and different points are mainly described below.

As illustrated in Fig. 20, the setting unit 9 is equipped with a record pause switch 207. A record pause switch 207 is a switch for stopping and resuming recording during stop of traveling, based on an operator's operation. The record pause switch 207 is a button, but may be another switch. In addition, the record pause switch 207 may be an icon button on the touch panel. The record pause switch 207 is connected to a record pause control unit 209 in the control unit 5.

The record pause control unit 209 performs various control based on operation of the record pause switch 207. Specifically, the pause control unit 203 can control the cleaning schedule creation unit 553 in the general control unit 55 (see Fig. 7 in the first embodiment).

The record pause switch 207 is enabled only during stop of the main body B. For instance, if a record pause switch 207b is an icon button on the touch panel, the record pause switch 207 is gray-out and disabled while the cleaning machine 100 is traveling. When the cleaning machine 100 stops traveling, the gray-out display is released so as to enable the record pause switch 207.

If the stopping operation of the record pause switch 207 is performed during stop of the main body B, the record pause control unit 209 controls the cleaning schedule creation unit 553 to stop recording the cleaning schedule 500 (i.e., recording position and time of the main body B is stopped).

If the resuming operation of the record pause switch 207 is performed during recording pause described above, the record pause control unit 209 controls the cleaning schedule creation unit 553 to resume recording the cleaning schedule 500 (i.e., recording position and time of the main body B is resumed).

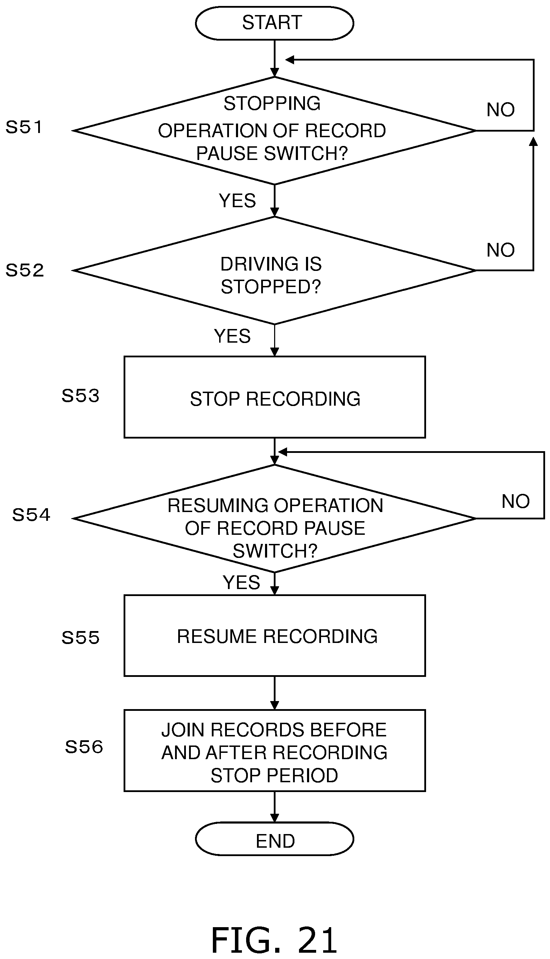

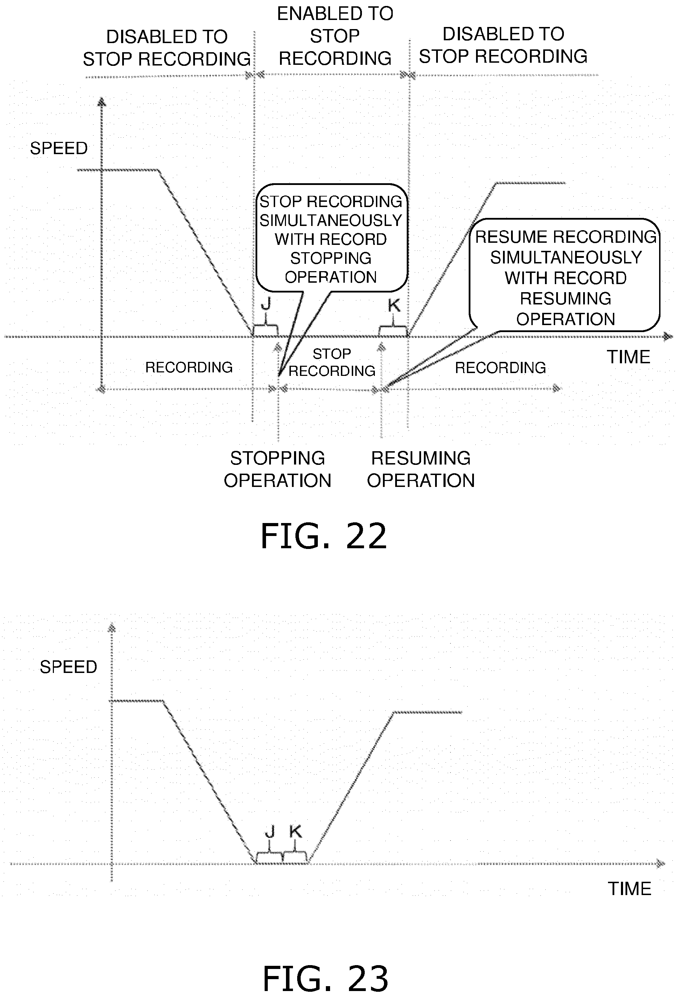

With reference to Figs. 21 to 23, a control operation of the travel teaching recording method according to the fifth embodiment is described. Fig. 21 is a flowchart illustrating a travel teaching recording control operation according to the fifth embodiment. Fig. 22 is a graph illustrating the relationship between time and speed in the teaching travel according to the fifth embodiment. Fig. 23 is a graph illustrating the relationship between time and speed in the reproduction travel according to the fifth embodiment.

The travel teaching recording method according to the fifth embodiment includes the following steps. In Step S51, it is determined whether or not the operator has performed the stopping operation of the record pause switch 207. Specifically, the record pause control unit 209 performs the above operation. If the stopping operation is performed, the process proceeds to Step S52.

In Step S52, it is determined whether or not the main body B is stopped. If it is stopped, the process proceeds to Step S53. If it is not stopped, the process returns to Step S51.

In Step S53, recording is promptly stopped.

In Step S54, it is determined whether or not the resuming operation of the record pause switch 207 has been performed. Specifically, the record pause control unit 209 performs the above operation. If the resuming operation is performed, the process proceeds to Step S55.

In Step S55, recording is promptly resumed.

In Step S56, the record before stopping recording and the record after resuming recording are joined and stored.

In this method, during the teaching travel, the record pause switch 207 is disabled. When the cleaning machine 100 stops, the record pause switch 207 is enabled. During stopping of the cleaning machine 100, the operator performs the stopping operation of the record pause switch 207, and then performs the resuming operation of the record pause switch 207. When the stopping operation of the record pause switch 207 is performed, recording is promptly stopped. When the resuming operation of the record pause switch 207 is performed, recording is promptly resumed. As described above, in Fig. 22, time range J after stopping traveling until stopping recording and time range K after resuming recording until starting traveling are recorded.

Therefore, in the copy travel, as illustrated in Fig. 23, the cleaning machine 100 stops operations for some time while stopping at the place to pause (time range J, K in Fig. 23), and then starts to move. In this embodiment, the record pause switch 207 does not function while the cleaning machine 100 is traveling, and hence the problem that position and speed of the cleaning machine 100 become discontinuous in the copy travel does not occur.

### 6. Sixth Embodiment

As another embodiment, there is described an example of filling travel, in which the control unit determines an autonomous travel path within an outer periphery taught by the operator by outer periphery direct teaching in advance, and the determined autonomous travel path is autonomously traveled. The cleaning machine 100 that is the same as that of the first embodiment performs outer periphery direct teaching. In this case, position and map are recorded (time point is not recorded).

In the teaching travel, the travel teaching recording method of the first to fifth embodiments described above is performed, and it is prevented that unnecessary information remains on the map. As a result, deterioration in navigation performance can be prevented. In this embodiment, for example, when a large obstacle such as a cart passes by, the operator can operate the pause switch 201 to stop traveling of the cleaning machine 100, so as to prevent information of the obstacle from remaining on the map.

### 7. Other Embodiments

Although the embodiments of the present invention are described above, the present invention is not limited to the embodiments described above. In particular, the embodiments and variations described in this specification can be arbitrarily combined as necessary.

As a variation of the first to fourth embodiments, the timing to stop traveling of the main body B and creating the cleaning schedule 500 and the timing to resume traveling of the main body B and creating the cleaning schedule 500 can be any appropriate combination of their patterns of the first to fourth embodiments.

In the cleaning machine, the structure of the cleaning unit and the cleaning method are not particularly limited.

The pause switch in the first to fourth embodiments may be realized by two switches (e.g., a stopping operation switch and a resuming operation switch).

The record pause switch in the fifth embodiment may be realized by two switches (e.g., a stopping operation switch and a resuming operation switch).

Stopping recording and resuming recording are performed in the third embodiment, but as a variation, it may be possible to join the position when the stopping operation is performed and the position when the constant speed travel is started, by editing without stopping recording and resuming recording.

The autonomous traveling body may be other than the cleaning machine. For instance, the autonomous traveling body may be a golf ball collecting machine, or a lawn mower machine. Device operations of the golf ball collecting machine (instructed states or instructable real states to be controlled that are unique to the device and are to be reproduced in the autonomous travel) include ball collecting operation, and ball discharging operation. Device operations of the lawn mower machine include driving and stopping a cutter.

### INDUSTRIAL APPLICABILITY

The present invention can be widely applied to travel teaching recording methods for an autonomous traveling body.

### REFERENCE SIGNS LIST

- 1: travel unit
- 3: cleaning unit
- 5: control unit
- 7: travel path teaching unit
- 8: attachment member
- 9: setting unit
- 10: cleaning machine
- 11: travel motor
- 13: main wheel
- 31: cleaning liquid discharge port
- 33: squeegee
- 35: cleaning member
- 51: cleaning control unit
- 53: travel control unit
- 55: general control unit
- 57: storage unit
- 71a: handle
- 71b: handle
- 73: package
- 75: travel control command calculation unit
- 91: selection unit
- 92: manual operation memory switch
- 93: cleaning condition teaching unit
- 94: cleaning control command calculation unit
- 95: setting operation unit
- 96: setting conversion unit
- 97: display
- 100: autonomous travel type cleaning machine
- 111: encoder
- 201: pause switch
- 203: pause control unit
- 207: record pause switch
- 209: record pause control unit
- 311: cleaning liquid supply pump
- 313: cleaning liquid supply tank
- 331: squeegee fixing member
- 333: suction motor
- 335: collecting member
- 337: squeegee lift actuator
- 351: fixing member
- 353: cleaning member rotating motor
- 355: pressing member
- 357: cleaning member pressing actuator
- 500: cleaning schedule
- 511: cleaning selection unit
- 513: cleaning unit control unit
- 531: travel selection unit
- 533: motor control unit
- 551: teaching data obtaining unit
- 553: cleaning schedule creation unit
- 555: SLAM unit
- 559: cleaning reproduction unit
- 5551a: front detector
- 5551b: rear detector
- 5553: map creation section
- 5555: position estimation section
- 5557: elapsed time determination section
- B: main body

## Claims

1. A travel teaching recording method for an autonomous traveling body (100) equipped with a body (B), a storage unit (57) that stores environment information and body position information when the body (B) performs a teaching travel, and a pause switch (201) configured to stop or resume the teaching travel of the body (B) and a recording of the teaching travel, the method comprising:
detecting (S41) whether or not an operator has performed stopping operation of the pause switch (201);
stopping (S42) traveling of the autonomous traveling body (100) and controlling timing to stop recording (S43) in the storage unit (57) if the stopping operation of the pause switch (201) is detected;
detecting (S44) whether or not the operator has performed resuming operation of the pause switch (201);
starting traveling of the autonomous traveling body (100) and controlling timing to resume the recording (S45) in the storage unit (57) if the resuming operation of the pause switch (201) is detected; and
joining (S47) the record before stopping recording and the record after resuming recording so as to store a joined record in the storage unit (57),
further comprising creating information to join information of a recording stop position and information of a recording resume position.

2. The travel teaching recording method for an autonomous traveling body (100) according to claim 1, wherein the timing to stop recording is a predetermined time after stopping traveling of the autonomous traveling body (100).

3. The travel teaching recording method for an autonomous traveling body (100) according to claim 1, wherein the timing to stop recording is simultaneous with stopping traveling of the autonomous traveling body (100).

4. The travel teaching recording method for an autonomous traveling body (100) according to any one of claims 1 to 3, further comprising editing stored information after the operator's stopping operation of the pause switch (201) until stopping recording.

5. The travel teaching recording method for an autonomous traveling body (100) according to any one of claims 1 to 4, wherein the timing to resume recording is simultaneous with starting traveling of the autonomous traveling body (100).

6. The travel teaching recording method for an autonomous traveling body (100) according to any one of claims 1 to 4, wherein the timing to resume recording is a predetermined time after starting traveling of the autonomous traveling body (100).

7. The travel teaching recording method for an autonomous traveling body (100) according to claim 1, wherein the timing to stop recording is simultaneous with the operator's stopping operation of the pause switch (201).

8. The travel teaching recording method for an autonomous traveling body (100) according to claim 1, wherein the timing to resume recording is simultaneous with the operator's resuming operation of the pause switch (201).

9. A travel teaching recording method for an autonomous traveling body (100) equipped with a body (B), a storage unit (57) that stores environment information and body position information when the body (B) performs a teaching travel, and a record pause switch (207) configured to stop or resume recording of the environment information and the body position information and the record pause switch (207) is enabled only during stop of the body (B), the method comprising:
detecting (S51) whether or not an operator has performed stopping operation of the record pause switch (207);
controlling timing to stop recording (S53) in the storage unit (57) if the stopping operation of the record pause switch (207) is detected;
detecting (S54) whether or not the operator has performed resuming operation of the record pause switch (207);
controlling timing to resume recording (S55) in the storage unit (57) if the resuming operation of the record pause switch (207) is detected; and
joining (S56) the record before stopping recording and the record after resuming recording so as to store a joined record in the storage unit (57).

10. An autonomous traveling body (100) comprising a body (B), a storage unit (57) that stores environment information and body position information when the body (B) performs a teaching travel, a pause switch (201) configured to stop or resume the teaching travel of the body (B) and to record the teaching travel, and a processor, wherein the processor is configured to perform:
detecting (S41) whether or not an operator has performed stopping operation of the pause switch (201);
stopping (S42) traveling of the autonomous traveling body (100) and controlling timing to stop recording (S43) in the storage unit (57) if the stopping operation of the pause switch (201) is detected;
detecting (S44) whether or not the operator has performed resuming operation of the pause switch (201);
starting traveling of the autonomous traveling body (100) and controlling timing to start the recording (S45) in the storage unit (57) if the resuming operation of the pause switch (201) is detected; and
joining (S47) the record before stopping recording and the record after resuming recording so as to store a joined record in the storage unit (57),
further comprising creating information to join information of a recording stop position and information of a recording resume position.

11. A recording medium storing a program that causes a computer to perform a travel teaching recording method for an autonomous traveling body (100), including a body (B), a storage unit (57) that stores environment information and body position information when the body (B) performs a teaching travel, and a pause switch (201) configured to stop or resume the teaching travel of the body (B) and to record the teaching travel, the program causes the computer to perform:
detecting (S41) whether or not an operator has performed stopping operation of the pause switch (201);
stopping (S42) traveling of the autonomous traveling body (100) and controlling timing to stop recording (S43) in the storage unit (57) if the stopping operation of the pause switch (201) is detected;
detecting (S44) whether or not the operator has performed resuming operation of the pause switch (201);
starting traveling of the autonomous traveling body (100) and controlling timing to start the recording (S45) in the storage unit (57) if the resuming operation of the pause switch (201) is detected; and
joining (S47) the record before stopping recording and the record after resuming recording so as to store a joined record in the storage unit (57),
further comprising creating information to join information of a recording stop position and information of a recording resume position.

## Patentansprüche

1. Fahrtlehraufzeichnungsverfahren für einen autonom fahrenden Körper (100), der mit einem Körper (B), einer Speichereinheit (57), die Umgebungsinformationen und Körperpositionsinformationen speichert, wenn der Körper (B) eine Lehrfahrt durchführt, und einem Pausenschalter (201) ausgestattet ist, der dazu konfiguriert ist, die Lehrfahrt des Körpers (B) und eine Aufzeichnung der Lehrfahrt zu stoppen oder wiederaufzunehmen, wobei das Verfahren folgende Schritte aufweist:
Erfassen (S41), ob ein Bediener eine Stoppbetätigung des Pausenschalters (201) durchgeführt hat oder nicht;
Stoppen (S42) eines Fahrens des autonom fahrenden Körpers (100) und Steuern einer Zeitsteuerung zum Stoppen eines Aufzeichnens (S43) in der Speichereinheit (57), wenn die Stoppbetätigung des Pausenschalters (201) erfasst wird;
Erfassen (S44), ob der Bediener eine Wiederaufnahmebetätigung des Pausenschalters (201) durchgeführt hat oder nicht;
Starten eines Fahrens des autonom fahrenden Körpers (100) und Steuern einer Zeitsteuerung zum Wiederaufnehmen eines Aufzeichnens (S45) in der Speichereinheit (57), wenn die Wiederaufnahmebetätigung des Pausenschalters (201) erfasst wird; und
Verbinden (S47) der Aufzeichnung vor dem Stoppen des Aufzeichnens und der Aufzeichnung nach dem Wiederaufnehmen des Aufzeichnens, um eine verbundene Aufzeichnung in der Speichereinheit (57) zu speichern,
das ferner ein Erzeugen von Informationen zum Verbinden von Informationen einer Aufzeichnungsstoppposition und Informationen einer Aufzeichnungswiederaufnahmeposition aufweist.

2. Fahrtlehraufzeichnungsverfahren für einen autonom fahrenden Körper (100) gemäß Anspruch 1, bei dem die Zeitsteuerung zum Stoppen des Aufzeichnens eine vorbestimmte Zeit nach dem Stoppen der Fahrt des autonom fahrenden Körpers (100) ist.

3. Fahrtlehraufzeichnungsverfahren für einen autonom fahrenden Körper (100) gemäß Anspruch 1, bei dem die Zeitsteuerung zum Stoppen des Aufzeichnens gleichzeitig mit dem Stoppen der Fahrt des autonom fahrenden Körpers (100) ist.

4. Fahrtlehraufzeichnungsverfahren für einen autonom fahrenden Körper (100) gemäß einem der Ansprüche 1 bis 3, das ferner ein Bearbeiten gespeicherter Informationen nach dem Stoppvorgang des Pausenschalters (201) durch den Bediener bis zum Stoppen des Aufzeichnens aufweist.

5. Fahrtlehraufzeichnungsverfahren für einen autonom fahrenden Körper (100) gemäß einem der Ansprüche 1 bis 4, bei dem die Zeitsteuerung zum Wiederaufnehmen des Aufzeichnens gleichzeitig mit dem Starten der Fahrt des autonom fahrenden Körpers (100) ist.

6. Fahrtlehraufzeichnungsverfahren für einen autonom fahrenden Körper (100) gemäß einem der Ansprüche 1 bis 4, bei dem die Zeitsteuerung zum Wiederaufnehmen des Aufzeichnens eine vorbestimmte Zeit nach dem Starten der Fahrt des autonom fahrenden Körpers (100) ist.

7. Fahrtlehraufzeichnungsverfahren für einen autonom fahrenden Körper (100) gemäß Anspruch 1, bei dem die Zeitsteuerung zum Stoppen des Aufzeichnens gleichzeitig mit dem Stoppvorgang des Pausenschalters (201) durch den Bediener ist.

8. Fahrtlehraufzeichnungsverfahren für einen autonom fahrenden Körper (100) gemäß Anspruch 1, bei dem die Zeitsteuerung zum Wiederaufnehmen des Aufzeichnens gleichzeitig mit der Wiederaufnahmebetätigung des Pausenschalters (201) durch den Bediener ist.

9. Fahrtlehraufzeichnungsverfahren für einen autonom fahrenden Körper (100), der mit einem Körper (B), einer Speichereinheit (57), die Umgebungsinformationen und Körperpositionsinformationen speichert, wenn der Körper (B) eine Lehrfahrt durchführt, und einem Aufzeichnungspausenschalter (207) ausgestattet ist, der dazu konfiguriert ist, ein Aufzeichnen der Umgebungsinformationen und der Körperpositionsinformationen zu stoppen oder wiederaufzunehmen, und der Aufzeichnungspausenschalter (207) nur während des Stoppens des Körpers (B) aktiviert ist, wobei das Verfahren folgende Schritte aufweist:
Erfassen (S51), ob ein Bediener eine Stoppbetätigung des Aufzeichnungspausenschalters (207) durchgeführt hat oder nicht;
Steuern einer Zeitsteuerung zum Stoppen des Aufzeichnens (S53) in der Speichereinheit (57), wenn die Stoppbetätigung des Aufzeichnungspausenschalters (207) erfasst wird;
Erfassen (S54), ob der Bediener eine Wiederaufnahmebetätigung des Aufzeichnungspausenschalters (207) durchgeführt hat oder nicht;
Steuern einer Zeitsteuerung zum Wiederaufnehmen des Aufzeichnens (S55) in der Speichereinheit (57), wenn die Wiederaufnahmebetätigung des Aufzeichnungspausenschalters (207) erfasst wird; und
Verbinden (S56) der Aufzeichnung vor dem Stoppen des Aufzeichnens und der Aufzeichnung nach dem Wiederaufnehmen des Aufzeichnens, um eine verbundene Aufzeichnung in der Speichereinheit (57) zu speichern.

10. Autonom fahrender Körper (100), der einen Körper (B), eine Speichereinheit (57), die Umgebungsinformationen und Körperpositionsinformationen speichert, wenn der Körper (B) eine Lehrfahrt durchführt, einen Pausenschalter (201), der dazu konfiguriert ist, die Lehrfahrt des Körpers (B) zu stoppen oder wiederaufzunehmen und die Lehrfahrt aufzuzeichnen, und einen Prozessor aufweist, wobei der Prozessor dazu konfiguriert ist, folgende Schritte durchzuführen:
Erfassen (S41), ob ein Bediener eine Stoppbetätigung des Pausenschalters (201) durchgeführt hat oder nicht;
Stoppen (S42) eines Fahrens des autonom fahrenden Körpers (100) und Steuern einer Zeitsteuerung zum Stoppen des Aufzeichnens (S43) in der Speichereinheit (57), wenn die Stoppbetätigung des Pausenschalters (201) erfasst wird;
Erfassen (S44), ob der Bediener eine Wiederaufnahmebetätigung des Pausenschalters (201) durchgeführt hat oder nicht;
Starten eines Fahrens des autonom fahrenden Körpers (100) und Steuern einer Zeitsteuerung zum Starten des Aufzeichnens (S45) in der Speichereinheit (57), wenn die Wiederaufnahmebetätigung des Pausenschalters (201) erfasst wird; und
Verbinden (S47) der Aufzeichnung vor dem Stoppen des Aufzeichnens und der Aufzeichnung nach dem Wiederaufnehmen des Aufzeichnens, um eine verbundene Aufzeichnung in der Speichereinheit (57) zu speichern,
ferner mit einem Erzeugen von Informationen zum Verbinden von Informationen einer Aufzeichnungsstoppposition und Informationen einer Aufzeichnungswiederaufnahmeposition.

11. Aufzeichnungsmedium, das ein Programm speichert, das bewirkt, dass ein Computer ein Fahrtlehraufzeichnungsverfahren für einen autonom fahrenden Körper (100) durchführt, der einen Körper (B), eine Speichereinheit (57), die Umgebungsinformationen und Körperpositionsinformationen speichert, wenn der Körper (B) eine Lehrfahrt durchführt, und einen Pausenschalter (201) aufweist, der dazu konfiguriert ist, die Lehrfahrt des Körpers (B) zu stoppen oder wiederaufzunehmen und die Lehrfahrt aufzuzeichnen, wobei das Programm bewirkt, dass der Computer folgende Schritte durchführt:
Erfassen (S41), ob ein Bediener eine Stoppbetätigung des Pausenschalters (201) durchgeführt hat oder nicht;
Stoppen (S42) eines Fahrens des autonom fahrenden Körpers (100) und Steuern einer Zeitsteuerung zum Stoppen des Aufzeichnens (S43) in der Speichereinheit (57), wenn die Stoppbetätigung des Pausenschalters (201) erfasst wird;
Erfassen (S44), ob der Bediener eine Wiederaufnahmebetätigung des Pausenschalters (201) durchgeführt hat oder nicht;
Starten eines Fahrens des autonom fahrenden Körpers (100) und Steuern einer Zeitsteuerung zum Starten des Aufzeichnens (S45) in der Speichereinheit (57), wenn die Wiederaufnahmebetätigung des Pausenschalters (201) erfasst wird; und
Verbinden (S47) der Aufzeichnung vor dem Stoppen des Aufzeichnens und der Aufzeichnung nach dem Wiederaufnehmen des Aufzeichnens, um eine verbundene Aufzeichnung in der Speichereinheit (57) zu speichern,
ferner mit einem Erzeugen von Informationen zum Verbinden von Informationen einer Aufzeichnungsstoppposition und Informationen einer Aufzeichnungswiederaufnahmeposition.

## Revendications

1. Procédé d'enregistrement d'enseignement de déplacement pour un corps mobile autonome (100) équipé d'un corps (B), d'une unité de stockage (57) qui stocke des informations d'environnement et des informations de position de corps lorsque le corps (B) effectue un déplacement d'enseignement, et d'un commutateur de pause (201) configuré pour arrêter ou reprendre le déplacement d'enseignement du corps (B) et un enregistrement du déplacement d'enseignement, le procédé comprenant le fait de :
détecter (S41) si un opérateur a effectué ou non une opération d'arrêt du commutateur de pause (201) ;
arrêter (S42) le déplacement du corps mobile autonome (100) et commander le moment où arrêter l'enregistrement (S43) dans l'unité de stockage (57) si l'opération d'arrêt du commutateur de pause (201) est détectée ;
détecter (S44) si l'opérateur a effectué ou non une opération de reprise du commutateur de pause (201) ;
démarrer le déplacement du corps mobile autonome (100) et commander le moment où reprendre l'enregistrement (S45) dans l'unité de stockage (57) si l'opération de reprise du commutateur de pause (201) est détectée ; et
joindre (S47) l'enregistrement avant l'arrêt de l'enregistrement et l'enregistrement après la reprise de l'enregistrement de manière à stocker un enregistrement joint dans l'unité de stockage (57),
comprenant en outre le fait de créer des informations pour joindre des informations d'une position d'arrêt d'enregistrement et des informations d'une position de reprise d'enregistrement.

2. Procédé d'enregistrement d'enseignement de déplacement pour un corps mobile autonome (100) selon la revendication 1, dans lequel le moment où arrêter l'enregistrement est un temps prédéterminé après l'arrêt du déplacement du corps mobile autonome (100).

3. Procédé d'enregistrement d'enseignement de déplacement pour un corps mobile autonome (100) selon la revendication 1, dans lequel le moment où arrêter l'enregistrement est simultané à l'arrêt du déplacement du corps mobile autonome (100).

4. Procédé d'enregistrement d'enseignement de déplacement pour un corps mobile autonome (100) selon l'une quelconque des revendications 1 à 3, comprenant en outre le fait de modifier des informations stockées après l'opération d'arrêt du commutateur de pause (201) de l'opérateur jusqu'à l'arrêt de l'enregistrement.

5. Procédé d'enregistrement d'enseignement de déplacement pour un corps mobile autonome (100) selon l'une quelconque des revendications 1 à 4, dans lequel le moment où reprendre l'enregistrement est simultané au démarrage du déplacement du corps mobile autonome (100).

6. Procédé d'enregistrement d'enseignement de déplacement pour un corps mobile autonome (100) selon l'une quelconque des revendications 1 à 4, dans lequel le moment où reprendre l'enregistrement est un temps prédéterminé après le démarrage du déplacement du corps mobile autonome (100).

7. Procédé d'enregistrement d'enseignement de déplacement pour un corps mobile autonome (100) selon la revendication 1, dans lequel le moment où arrêter l'enregistrement est simultané à l'opération d'arrêt du commutateur de pause (201) de l'opérateur.

8. Procédé d'enregistrement d'enseignement de déplacement pour un corps mobile autonome (100) selon la revendication 1, dans lequel le moment où reprendre l'enregistrement est simultané à l'opération de reprise du commutateur de pause (201) de l'opérateur.

9. Procédé d'enregistrement d'enseignement de déplacement pour un corps mobile autonome (100) équipé d'un corps (B), d'une unité de stockage (57) qui stocke des informations d'environnement et des informations de position de corps lorsque le corps (B) effectue un déplacement d'enseignement, et d'un commutateur de pause d'enregistrement (207) configuré pour arrêter ou reprendre l'enregistrement des informations d'environnement et des informations de position de corps et le commutateur de pause d'enregistrement (207) est activé uniquement pendant l'arrêt du corps (B), le procédé comprenant le fait de :
détecter (S51) si un opérateur a effectué ou non une opération d'arrêt du commutateur de pause d'enregistrement (207) ;
commander le moment où arrêter l'enregistrement (S53) dans l'unité de stockage (57) si l'opération d'arrêt du commutateur de pause d'enregistrement (207) est détectée ;
détecter (S54) si l'opérateur a effectué ou non une opération de reprise du commutateur de pause d'enregistrement (207) ;
commander le moment où reprendre l'enregistrement (S55) dans l'unité de stockage (57) si l'opération de reprise du commutateur de pause d'enregistrement (207) est détectée ; et
joindre (S56) l'enregistrement avant l'arrêt de l'enregistrement et l'enregistrement après la reprise de l'enregistrement de manière à stocker un enregistrement joint dans l'unité de stockage (57).

10. Corps mobile autonome (100) comprenant un corps (B), une unité de stockage (57) qui stocke des informations d'environnement et des informations de position de corps lorsque le corps (B) effectue un déplacement d'enseignement, un commutateur de pause (201) configuré pour arrêter ou reprendre le déplacement d'enseignement du corps (B) et pour enregistrer le déplacement d'enseignement, et un processeur, dans lequel le processeur est configuré pour :
détecter (S41) si un opérateur a effectué ou non une opération d'arrêt du commutateur de pause (201) ;
arrêter (S42) le déplacement du corps mobile autonome (100) et commander le moment où arrêter l'enregistrement (S43) dans l'unité de stockage (57) si l'opération d'arrêt du commutateur de pause (201) est détectée ;
détecter (S44) si l'opérateur a effectué ou non une opération de reprise du commutateur de pause (201) ;
démarrer le déplacement du corps mobile autonome (100) et commander le moment où reprendre l'enregistrement (S45) dans l'unité de stockage (57) si l'opération de reprise du commutateur de pause (201) est détectée ; et
joindre (S47) l'enregistrement avant l'arrêt de l'enregistrement et l'enregistrement après la reprise de l'enregistrement de manière à stocker un enregistrement joint dans l'unité de stockage (57),
comprenant en outre le fait de créer des informations pour joindre des informations d'une position d'arrêt d'enregistrement et des informations d'une position de reprise d'enregistrement.

11. Support d'enregistrement stockant un programme qui amène un ordinateur à effectuer un procédé d'enregistrement d'enseignement de déplacement pour un corps mobile autonome (100), incluant un corps (B), une unité de stockage (57) qui stocke des informations d'environnement et des informations de position de corps lorsque le corps (B) effectue un déplacement d'enseignement, et un commutateur de pause (201) configuré pour arrêter ou reprendre le déplacement d'enseignement du corps (B) et pour enregistrer le déplacement d'enseignement, le programme amenant l'ordinateur à :
détecter (S41) si un opérateur a effectué ou non une opération d'arrêt du commutateur de pause (201) ;
arrêter (S42) le déplacement du corps mobile autonome (100) et commander le moment où arrêter l'enregistrement (S43) dans l'unité de stockage (57) si l'opération d'arrêt du commutateur de pause (201) est détectée ;
détecter (S44) si l'opérateur a effectué ou non une opération de reprise du commutateur de pause (201) ;
démarrer le déplacement du corps mobile autonome (100) et commander le moment où reprendre l'enregistrement (S45) dans l'unité de stockage (57) si l'opération de reprise du commutateur de pause (201) est détectée ; et
joindre (S47) l'enregistrement avant l'arrêt de l'enregistrement et l'enregistrement après la reprise de l'enregistrement de manière à stocker un enregistrement joint dans l'unité de stockage (57),
comprenant en outre le fait de créer des informations pour joindre des informations d'une position d'arrêt d'enregistrement et des informations d'une position de reprise d'enregistrement.
